# EUROPEAN PATENT APPLICATION

(11) **EP 4 746 370 A1**
(43) Date of publication of application: **20.05.2026**
(21) Application number: 24884148.8
(22) Date of filing: 16.08.2024
(51) Int. Cl.: H04L 51/046

(54) **INFORMATION PUSHING METHOD AND WEARABLE DEVICE**

(30) Priority: 03.11.2023 CN 202311461360; 26.12.2023 CN 202311820559
(71) Applicant: Honor Device Co., Ltd., Shenzhen, Guangdong 518040 (CN)
(72) Inventor: DING, Yiyan, Shenzhen, Guangdong 518040 (CN); HUANG, Liwei, Shenzhen, Guangdong 518040 (CN); GAO, Bo, Shenzhen, Guangdong 518040 (CN); BAO, Xiaojun, Shenzhen, Guangdong 518040 (CN); KWONG, Kah Chun, Shenzhen, Guangdong 518040 (CN)
(74) Representative: Henselmann, Alexander Gerhard
(86) International application number: PCT/CN2024/112917
(87) International publication number: WO 2025/092141

(57) **Abstract**

Embodiments of this application provide an information pushing method and a wearable device, which relate to the field of terminal technologies, to resolve an information pushing problem of the wearable device. A specific solution includes: displaying a first interface, where the first interface is a user interface of the wearable device; displaying a first capsule, where the first capsule is used to push first information; and switching, in response to a first operation performed by a user, from the first interface to display a second interface, and continuing to display the first capsule.

## Description

This application claims priority to Chinese Patent Application No. 202311461360.7 filed with the China National Intellectual Property Administration on November 3, 2023 and entitled "INFORMATION PUSHING METHOD AND WEARABLE DEVICE", and to Chinese Patent Application No. 202311820559.4, filed with the China National Intellectual Property Administration on December 26, 2023 and entitled "INFORMATION PUSHING METHOD AND WEARABLE DEVICE", both of which are incorporated herein by reference in their entireties.

### TECHNICAL FIELD

This application relates to the field of terminal device technologies, and in particular, to an information pushing method and a wearable device.

### BACKGROUND

With the rapid development of intelligent terminal technologies, there are more types of applications (Applications, APPs) and services, and correspondingly, much more information needs to be pushed to a user. Currently, if the user views pushed information through a wearable device, the user needs to indicate the wearable device to switch to display a specific user interface. For a user not familiar with the wearable device, man-machine interaction efficiency for viewing the pushed information is relatively low.

### SUMMARY

Embodiments of this application provide an information pushing method and a wearable device, to improve man-machine interaction efficiency when a user views pushed information on a wearable device.

To achieve the foregoing objective, the following technical solutions are used in the embodiments of this application.

According to a first aspect, an embodiment of this application provides an information pushing method, applied to a wearable device, where the method includes: displaying a first interface, where the first interface is a user interface of the wearable device; displaying a first capsule, where the first capsule is used to push first information; and switching, in response to a first operation performed by a user, from the first interface to display a second interface, and continuing to display the first capsule, where the second interface is another user interface of the wearable device.

For example, the first interface and the second interface may be two different user interfaces provided by the wearable device, and the first operation may be an operation indicating to switch between different user interfaces. For example, when the first interface is an AOD interface and the second interface is a dial interface, the first operation may be an operation of lighting up a display screen of the wearable device. For another example, when the first interface is a dial interface, and the second interface is a smart interface, the first operation may be a left-swiping operation or a right-swiping operation.

In the foregoing embodiment, after the first capsule is displayed on the first interface, the first interface is switched to another user interface. The first capsule may continue to be displayed on the another user interface. In other words, the first capsule may be globally displayed, and the user does not need to return to the first interface when needing to view the first information, to improve man-machine interaction efficiency when the user views the first information.

In some embodiments, when the first information is first-type information, the first capsule continues to be displayed after duration in which the wearable device displays the first capsule reaches first duration; and in response to an operation performed by the user on the first capsule, display of the first capsule is canceled.

In the foregoing embodiment, when not receiving a user operation, the first capsule may be displayed for a long period of time, which is convenient for the user to view, at any time, the first information pushed by the first capsule. Certainly, the user may also indicate to cancel the first capsule, to prevent the first capsule from causing interference to the user.

In some embodiments, when the first information is second-type information, the method further includes: canceling, after duration in which the wearable device displays the first capsule reaches first duration, display of the first capsule. The first-type information is different from the second-type information.

In the foregoing embodiment, when the first capsule that pushes the first-type information does not receive the user operation, display duration is not limited. When the first capsule that pushes the second-type information does not receive the user operation, display duration is limited, to avoid a case in which all types of pushed information is pushed for a long period of time, causing excessive interference to the user.

In some embodiments, pushing confidences of various types of information may be evaluated in advance. The pushing confidences are used to represent a probability that pushed information is information that the user actually needs to view. The first-type information includes information whose pushing confidence is greater than or equal to a preset value, and is information with a deterministic intention. The second-type information includes information whose pushing confidence is less than a preset value, and is information without a deterministic intention.

In the foregoing embodiment, it is determined, based on the pushing confidence of the pushed information, whether display of the corresponding first capsule is limited by duration, so that pushing is more intelligent and accurate, and interference of the pushed information to the user is reduced.

In another embodiment, it may be further determined, based on an importance degree and an urgency degree of the pushed information, whether display of the corresponding first capsule is limited by duration, to avoid a case in which the user misses important and urgent information.

In some embodiments, the first-type information includes ride-hailing notification information, navigation notification information, takeaway delivery information, game information, and a trip reminder; and the second-type information includes access control service information, attendance checking reminder information, payment service information, subway service information, and express pick-up information.

In the foregoing embodiment, the first-type information may be information that the user explicitly indicates to view. For example, the first-type information may be a notification generated by a service (a ride-hailing service, a navigation service, a takeaway service, a flight service, a train service, or a game service) enabled in response to the user operation. The second-type information is information that a device predicts that the user may need to view.

In some embodiments, when the first information is the first-type information, the operation on the first capsule includes a tapping operation on the first capsule; and after the canceling display of the first capsule, the method further includes: displaying a third interface, where the third interface is a user interface used to process the first information; and detecting a second operation of exiting that is indicated by the user, displaying the second interface again, and skipping displaying the first capsule.

In the foregoing embodiment, after the user operates the wearable device to process the first information, for example, taps and views the first information, display of the first capsule may be canceled, to avoid excessive interference caused by the first information to the user.

In some embodiments, when the first information is the first-type information, the operation on the first capsule includes a downward swiping operation relative to the first capsule.

In some embodiments, after the switching, in response to a first operation performed by a user, from the first interface to display a second interface, the method further includes: displaying a fourth interface in response to a third operation performed by the user, where the fourth interface includes a first card or a first icon that is used to push the first information; canceling display of the first capsule; and displaying, in response to a fourth operation performed by the user, the second interface again, and displaying the first capsule again.

In the foregoing embodiment, the wearable device prevents a plurality of access entries of the first information from appearing on a same interface in a manner of temporarily canceling display of the first capsule, to implement information deduplication.

In some embodiments, when the first information is first-type information, after the displaying the first capsule, the method further includes: displaying a second capsule, and canceling display of the first capsule, where the second capsule is used to push second information, a pushing confidence of the second information is less than a pushing confidence of the first information, the pushing confidence is used to represent a probability that pushed information is information that the user actually needs to view, and a pushing time point of the second information is later than a pushing time point of the first information; and after duration in which the wearable device displays the second capsule reaches second duration, canceling display of the second capsule, and displaying the first capsule again.

In the foregoing embodiment, the first information is the first-type information, the pushing confidence of the second information is less than the pushing confidence of the first information, and the pushing time point of the second information is later than the pushing time point of the first information When the second information needs to be pushed, the first capsule may be temporarily hidden, and the second capsule is displayed, to ensure that the second information can reach the user. After the second duration, display of the first capsule is resumed, and display of the second capsule is canceled, to ensure that information with a higher pushing confidence can effectively reach the user.

In some embodiments, when the first information is first-type information, after the displaying the first capsule, the method further includes: displaying a third capsule, and canceling display of the first capsule, where the third capsule is used to push third information, the third information is also the first-type information, and a pushing time point of the third information is later than a pushing time point of the first information.

In the foregoing embodiment, when another piece of first-type information is pushed, the another piece of first-type information is pushed based on a sequence of a pushing time point.

In some embodiments, in response to state update of the first information, display of the third capsule is canceled, and the first capsule is displayed again.

In the foregoing embodiment, after the first information whose display is canceled is updated, display of the first capsule may be triggered again, to ensure that the updated first information can reach the user.

In some embodiments, the first information includes progress information updated in real time, and the method further includes: determining the state update of the first information in response to the progress information being updated to a case in which a progress ends.

In some embodiments, the first information includes first content and second content, and the first capsule is used to display the first content and the second content in a scrolling manner.

In some embodiments, the wearable device is in communication connection with a first device, and before the displaying a first capsule, the method further includes: receiving a first indication from the first device, where the first indication includes an identifier used to represent pushing the first information and a display attribute corresponding to the first capsule, where when the first information is the second-type information, the first capsule corresponds to a first attribute value; and when the first information is the first-type information, the first capsule corresponds to a second attribute value, where the first attribute value indicates that the first capsule is displayed in a defined time period, and the second attribute value indicates that display duration of the first capsule is not limited.

In some embodiments, before the displaying the first capsule, the method further includes: displaying a first pop-up window, where the first pop-up window is used to push the first information; and canceling display of the first pop-up window after the first pop-up window is displayed for third duration.

In some embodiments, the wearable device is in communication connection with a first device, and before the displaying a first capsule, the method further includes: receiving a first indication from the first device for an N^{th} time, where the first indication includes an identifier used to represent pushing the first information, where N is a preset positive integer, and the first information is the second-type information; and the displaying a first capsule includes: displaying the first capsule for the N^{th} time in response to the first indication; and after the duration in which the first capsule is displayed reaches the first duration, canceling display of the first capsule, where if the operation performed by the user on the first capsule is not detected in any one of the first N time of displaying the first capsule, the method further includes: receiving the first indication for an N+1^{th} time; and skipping displaying the first capsule.

In the foregoing embodiment, during the first N time of displaying the first capsule, if the operation performed by the user on the first capsule is not detected, it may be identified that the user does not pay attention to the first information. In this scenario, excessive interference to the user that is caused by frequent pushing is avoided based on a quantity of times of pushing.

In some embodiments, the method further includes: displaying an always on display AOD interface in response to a user operation; receiving an indication to push fourth information, and skipping displaying a capsule used to push the fourth information, where the fourth information is the second-type information; switching, in response to the user operation, from the AOD interface to display a dial interface, where a fourth capsule is displayed on the dial interface, and the fourth capsule is used to push the fourth information; displaying the always on display interface again in response to the user operation; and displaying, in response to fifth information, a fifth capsule used to push the fifth information, where the fifth information is the first-type information.

In the foregoing embodiment, the first capsule corresponding to the first-type information may be displayed on all user interfaces of the wearable device, to implement unlimited global display. The first capsule corresponding to the second-type information may be displayed on most user interfaces of the wearable device, to implement limited global display, and avoid excessive interference caused by the second-type information to the user.

In another embodiment, a notification center interface and a dynamic notification pop-up window may not display the second-type information.

According to a second aspect, an embodiment of this application provides an information pushing method, applied to a first device and a wearable device that are in communication with each other, where the method includes: The first device displays a card or a capsule that is used to push first information, where the wearable device displays a first interface, and the first interface is any user interface of the wearable device; the first device sends a first indication to the wearable device, where the first indication corresponds to the first information; the wearable device displays a first capsule in response to the first indication, where the first capsule is used to push the first information; and the wearable device switches, in response to a first operation performed by a user, from the first interface to display a second interface, and continues to display the first capsule.

According to a third aspect, an embodiment of this application provides a wearable device, where the wearable device includes a display screen, a processor, and a memory, where the memory is configured to store computer instructions, and the display screen is configured to push information to a user; and when the processor is configured to execute the computer instructions, the wearable device is enabled to perform the method in the first aspect and possible embodiments thereof.

According to a fourth aspect, an embodiment of this application provides a computer storage medium, including computer instructions. When the computer instructions are run on a wearable device, the wearable device is enabled to perform the method in the first aspect and possible embodiments thereof. When the computer instructions are run on the wearable device and a first device, the wearable device and the first device are enabled to collaboratively perform the method in the second aspect and possible embodiments thereof.

According to a fifth aspect, this application provides a computer program product, where the computer program product, when run on the wearable device, enables the wearable device to perform the method in the first aspect and possible embodiments thereof. When the computer program product is run on the wearable device and the first device, the wearable device and the first device are enabled to collaboratively perform the method in the second aspect and possible embodiments thereof.

According to a sixth aspect, this application provides a chip system, applied to a wearable device and a first device, storing a computer program. The computer program, when executed, enables the wearable device and the first device to perform the method in the first aspect and possible embodiments thereof.

It may be understood that, the electronic device, the computer storage medium, and the computer program product that are provided in the foregoing aspects are all applied to the corresponding methods provided above. Therefore, for beneficial effects that can be achieved by the electronic device, the computer storage medium, and the computer program product, refer to the beneficial effects in the corresponding methods provided above. Details are not described herein again.

### BRIEF DESCRIPTION OF DRAWINGS

FIG. 1 is an example diagram of an information pushing manner of a mobile phone for different importance degrees and different urgency degrees according to an embodiment of this application;
FIG. 2A to FIG. 2E are example diagrams 1 of an interface on which a mobile phone performs information pushing in an actual use scenario according to an embodiment of this application;
FIG. 3 is an example diagram 2 of an interface on which a mobile phone performs information pushing in an actual use scenario according to an embodiment of this application;
FIG. 4A is an example diagram 3 of an interface on which a mobile phone performs information pushing in an actual use scenario according to an embodiment of this application;
FIG. 4B is an example diagram 4 of an interface on which a mobile phone performs information pushing in an actual use scenario according to an embodiment of this application;
FIG. 5 is an example diagram 5 of an interface on which a mobile phone performs information pushing in an actual use scenario according to an embodiment of this application;
FIG. 6 is an example diagram 6 of an interface on which a mobile phone performs information pushing in an actual use scenario according to an embodiment of this application;
FIG. 7A is an example diagram of a scenario in which a mobile phone and a smart watch collaboratively push information according to an embodiment of this application;
FIG. 7B is an example diagram of an interface on which a smart watch performs information pushing in a manner of an icon in an actual use scenario according to an embodiment of this application;
FIG. 7C is an example diagram of an interface on which a smart watch performs information pushing in a manner of an icon in an actual use scenario according to an embodiment of this application;
FIG. 8 is an example diagram of an interface on which a smart watch performs information pushing in a manner of a card in an actual use scenario according to an embodiment of this application;
FIG. 9 is an example diagram of an interface on which a smart watch performs information pushing by using a dynamic full-screen pop-up window and a card in an actual use scenario according to an embodiment of this application;
FIG. 10A is an example diagram 1 of an interface on which a smart watch performs information pushing by using a floating capsule in an actual use scenario according to an embodiment of this application;
FIG. 10B is an example diagram 2 of an interface on which a smart watch performs information pushing by using a floating capsule in an actual use scenario according to an embodiment of this application;
FIG. 11A is an example diagram of dividing an information type based on an importance degree and an urgency degree according to an embodiment of this application;
FIG. 11B is an instance diagram of FIG. 11A;
FIG. 11C is another instance diagram of FIG. 11A;
FIG. 12A is a display example diagram of a transient capsule in different use scenarios according to an embodiment of this application;
FIG. 12B is a display example diagram of a persistent capsule in different use scenarios according to an embodiment of this application;
FIG. 13 is an example diagram of indicating to cancel a persistent capsule according to an embodiment of this application;
FIG. 14A is an example diagram of a display scenario of a transient capsule according to an embodiment of this application;
FIG. 14B is an example diagram of displaying a plurality of pieces of key content in a scrolling manner on a floating capsule according to an embodiment of this application;
FIG. 15 is an example diagram of a smart watch performing information pushing by using a dynamic full-screen pop-up window and a floating capsule according to an embodiment of this application;
FIG. 16 is an example diagram of a smart watch performing pushing deduplication in a process of performing information pushing by using a persistent capsule according to an embodiment of this application;
FIG. 17 is an example diagram of a smart watch performing pushing deduplication in a process of performing information pushing by using a transient capsule according to an embodiment of this application;
FIG. 18 is an example diagram 1 of a smart watch sequentially pushing a plurality of pieces of target information by using a floating capsule according to an embodiment of this application;
FIG. 19 is an example diagram 2 of a smart watch sequentially pushing a plurality of pieces of target information by using a floating capsule according to an embodiment of this application;
FIG. 20 is an example diagram 3 of a smart watch sequentially pushing a plurality of pieces of target information by using a floating capsule according to an embodiment of this application;
FIG. 21 is an example diagram 1 of a smart watch pushing download progress information by using a floating capsule according to an embodiment of this application;
FIG. 22 is an example diagram 2 of a smart watch pushing download progress information by using a floating capsule according to an embodiment of this application;
FIG. 23 is an example diagram of various types of capsules according to an embodiment of this application; and
FIG. 24 is an example diagram of a structure of a smart watch according to an embodiment of this application.

### DESCRIPTION OF EMBODIMENTS

The following terms "first" and "second" are merely intended for a purpose of description, and shall not be understood as an indication or implication of relative importance or implicit indication of a quantity of indicated technical features. Therefore, a feature limited by "first" or "second" may explicitly or implicitly include one or more features. In descriptions of this embodiment, unless otherwise stated, "a plurality of" means two or more.

The following describes implementations of embodiments in detail with reference to the accompanying drawings.

Embodiments of this application provide an information pushing method, applied to a process in which an electronic device pushes information to a user. The pushed information may be various types of messages, such as a system message and an application message. The pushed information may also be various types of functions, for example, an application service. The pushed information may alternatively be an application that needs to be recommended to the user.

For example, the electronic device is a device configured with a display screen. For example, the electronic device may be a device with a screen (or referred to as a display screen) such as a portable computer (such as a mobile phone), a wearable device (such as a smart watch), a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), or a media player. A specific form of the electronic device is not specifically limited in the embodiments of this application.

The mobile phone may select an adaptive pushing form (or referred to as an access entry) based on an importance degree and an urgency degree of information to push the information to the user. For example, the foregoing pushing form (or referred to as the access entry) may include: a card, an icon, a capsule, and the like.

The card and the capsule may display text content or a graphic identifier that is related to the pushed information. For example, key content, state (progress) information, detailed content, and/or a graphic identifier of the pushed information are/is displayed. The information may include one or more pieces of key content. Different key content may describe the information from different dimensions. In addition, all key content may form detailed content corresponding to the information. The state (progress) information may indicate a status of key content of the information that varies with time.

The icon may display a graphic identifier related to the pushed information. For example, when the pushed information is an application message, the icon may be an application icon of an application that provides the application message. When the pushed information is an application service, the icon may be an application icon of an application that provides the application service, or a service icon corresponding to the application service.

The foregoing capsule may be displayed on any display interface, for example, an application interface provided by a system application or a third-party application. When the pushed information is the application service or the application, the mobile phone may select to use a capsule to display the application service or information related to the application.

In addition, the foregoing capsule may include a status bar capsule and a floating capsule.

### Status bar capsule

For example, the status bar capsule may be displayed on a signal bar. A layer corresponding to the signal bar is located above a layer corresponding to an interface displayed in real time. In a process in which a mobile phone switches display interfaces, a display location of the signal bar remains unchanged. Certainly, when the mobile phone enables a full-screen display mode (for example, displays a game interface provided by a game application), the mobile phone may hide the signal bar. When a display mode of the mobile phone switches between a landscape display mode and a portrait display mode, the display location of the signal bar may change.

In some examples, the status bar capsule may be used to display pushed information that has progress update and that has relatively high real-time performance, such as a ride-hailing notification (a notification indicating that a ride-hailing traveling service prompts a user to head for a pick-up point to wait for getting on a vehicle), a navigation service, and a download progress. For example, when the pushed information is the application service, the status bar capsule may display related information such as a real-time state or a service progress of the application service. When the pushed information is the application, the status bar capsule may also display an application icon of the application. The user may indicate, by tapping the status bar capsule, to switch to display an application service interface corresponding to a pushed application service or switch to display an application main interface corresponding to a pushed application.

### Floating capsule

For example, the foregoing floating capsule may be displayed on any location of a display interface, for example, an edge on a right side of the display interface.

In some examples, the floating capsule may display key content corresponding to the pushed information. For example, the pushed information is a ride-hailing notification, and the key content may be a license plate number of a vehicle. For another example, the pushed information is a payment service, and the key content may be text "payment code". In addition, the floating capsule may further display a graphic identifier corresponding to the pushed information. For example, the pushed information is the ride-hailing notification, and the graphic identifier may be a pattern of the vehicle.

The user may indicate, by tapping the floating capsule, the mobile phone to display an application interface corresponding to the pushed information. When the pushed information is a message, the corresponding application interface may be a detail interface including detailed content of the pushed information, and when the pushed information is the application service, the corresponding application interface may be the application service interface.

In addition, the floating capsule may correspondingly have an expanded state and a folded state. Compared with the floating capsule in the folded state, the floating capsule in the expanded state occupies larger display space, can display more content, and can display more related information. The mobile phone displays the floating capsule in the folded state by default. In response to an operation performed by the user on the floating capsule, the floating capsule in the expanded state is displayed. For example, the mobile phone displays an icon of a map application by using the floating capsule in the folded state, to prompt the user to pay attention to the map application. Then, in response to the operation performed by the user, the floating capsule in the expanded state may be displayed. The floating capsule in the expanded state includes a plurality of configuration items. Each configuration item corresponds to an entry of an application service related to the map application, includes an entry (for example, an entry of the navigation service) of an application service in the map application, and also includes an entry (for example, an address collection service provided by a notebook application) of an application service provided by another application.

The card may be displayed on a main interface, a leftmost screen, an always on display (always on display, AOD) interface, a locked screen interface, a notification bar interface, and another application interface.

The main interface is a split screen of a desktop, and the desktop may be a user interface provided by a desktop application (a system application configured to manage an application icon of an installed application). After the mobile phone is unlocked, the main interface may be displayed, and then the mobile phone may display, in response to the user operation, another split screen corresponding to the desktop. The split screen corresponding to the desktop further includes the leftmost screen. The leftmost screen is used to mainly display information to which the user has subscribed and evaluated information that the user needs to view.

The AOD interface may be an interface displayed in a mobile phone in which an AOD function is enabled after a screen is locked or is off. A card displayed on the AOD interface may be referred to as an AOD card. When the mobile phone is unlocked, the user may view, through the AOD card, information pushed by the mobile phone.

In a period in which the mobile phone displays the main interface (or the leftmost screen), the mobile phone detects a trigger event indicating that information needs to be pushed to the user, and guides the user to pay attention to the pushed information by displaying a card including the pushed information in a display area of the main interface (or the leftmost screen). It may be understood that, according to a pre-configured service rule, different pushed information may correspond to different trigger events. For example, if the mobile phone detects that the device is approaching an express storage site, the mobile phone may determine that a pick-up code related to the express storage site needs to be pushed, for example, a pick-up code of a package that is stored at the express storage site and that belongs to the user.

In addition, the card may further include a dynamic notification card and a dynamic pop-up window card. For example, during display of another application interface, when the mobile phone detects the trigger event indicating that the information needs to be pushed to the user, the dynamic notification card or the dynamic pop-up window card may be displayed. After the dynamic notification card is displayed, display duration of the dynamic notification card reaches preset duration 1, and the mobile phone may cancel display of the dynamic notification card. The dynamic message card may display key content corresponding to the pushed information and/or corresponding state (progress) information, so that the user can learn of a service or a message that has a relatively high requirement on real-time performance in a timely manner when using another application of the mobile phone.

After the dynamic pop-up window card is displayed, the mobile phone may cancel display of the dynamic pop-up window card in response to an operation performed by the user on the dynamic pop-up window card. Compared with the dynamic notification card, the dynamic pop-up window card is more eye-catching, occupies larger display space, and can interrupt a current intention of the user for using the mobile phone, to ensure that the user can pay attention to the pushed information, so that the pushed information can effectively reach the user.

In the foregoing embodiment, in the listed pushing forms, the dynamic pop-up window card is a global interrupt reminder, the dynamic notification card is a global large-area reminder, the floating capsule and the status bar capsule are global strong reminders, a main interface card and a leftmost screen card are small-area weak reminders, and an icon is a reminder that causes no interference and can be viewed at any time. Corresponding access efficiency of the "global interrupt reminder", the "global large-area reminder", the "global strong reminder", the "small-area weak reminder", and the "reminder that causes no interference and can be viewed at any time" gradually decreases. It may be understood that, the access efficiency may represent whether the user can effectively pay attention to the information after the information is pushed. Higher access efficiency indicates a higher probability that the user can effectively pay attention to the information after the information is pushed in the pushing form.

In some embodiments, a higher urgency degree and/or higher importance degree of information indicates higher access efficiency of a selectable pushing form.

In some embodiments, a measurement standard of the urgency degree of the information is: Whether attention needs to be currently interrupted to immediately view, process, or use the service. For example, in an example, an urgency degree of a service notification may include very urgent, urgent, fairly urgent, non-urgent, and the like.

For example, a very urgent notification needs to be processed by the user within a first preset time period (for example, 60s), for example, a notification of strengthening an alarm for the user, such as a ride-hailing notification. Very important information is very urgent information.

An urgent notification needs to be processed within a second preset time period (for example, 15 minutes to 60 minutes).

The urgent notification generally refers to a service that is being performed within 24 hours. For example, the user purchases a flight ticket for 5 days later, and a flight travel service issues a reminder one day in advance to remind the user of flight-related reminder, such as check-in and boarding.

The non-urgent notification generally does not need to be processed by the user.

In an embodiment, a measurement standard of an importance degree is: Whether a significant impact, such as life, property, time, or opportunity loss, is generated after the information is ignored. In an example, an importance degree of a service notification may include very important, important, fairly important, non-important, and the like.

Very important means that if the user does not process a notification, for example, a notification about a major natural disaster such as an earthquake or a typhoon, the life of the user may be threatened.

Important means that if the user does not process a notification, for example, a ride-hailing notification or an in-time express pick-up notification, property of the user may be damaged.

Fairly important means that if the user misses a notification, for example, a notification indicating that an express is being delivered, time of the user may be wasted.

Non-important means that if the user misses a notification, for example, a reminder of a healthy amount of time for mobile phone use by a system, there is no impact on the user.

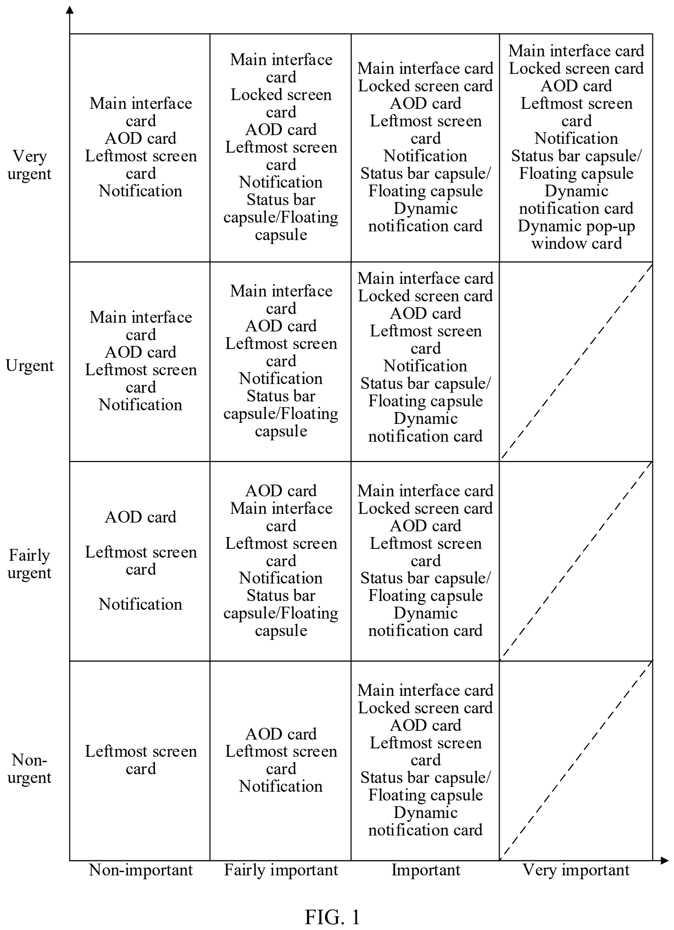

In some embodiments, as shown in FIG. 1, a horizontal axis represents an importance degree of information, and a vertical axis represents an urgency degree of information. The importance degree and the urgency degree that correspond to the information jointly determine a pushing form that can be selected for the type of information.

In other words, FIG. 1 shows one or more selectable pushing forms corresponding to different types of information, for example, information having different urgency degrees and/or different importance degrees.

A developer or a user of the mobile phone may select, from the selectable pushing forms according to an actual service requirement, a pushing form, for example, referred to as a target pushing form, that is actually used by each piece of information (a service, a message, or an application), and configure, when the information is being pushed, the mobile phone to push the information in the target pushing form.

As shown in FIG. 1, for very important and very urgent information, the selectable pushing forms include all pushing forms provided by the mobile phone. A very important and very urgent earthquake early warning notification is used as an example. The mobile phone may preconfigure a target pushing form of the earthquake early warning notification to be a dynamic pop-up window card, and use high access efficiency of the dynamic pop-up window card to enable the user to pay attention to the earthquake early warning notification in a timely manner. Further, a very important and very urgent typhoon notification is used. The mobile phone may preconfigure a target pushing form of the typhoon notification as a dynamic notification card, and prompt, by using timeliness and conspicuity of the dynamic notification card, the user to pay attention to a real-time condition of the typhoon without excessively affecting use of the mobile phone by the user.

In addition, for the very important and very urgent information, the mobile phone may further push the information to the user with reference to a plurality of pushing forms. For example, the mobile phone may preconfigure a case in which the target pushing form of the type of information includes a dynamic pop-up window card, a dynamic notification card, an AOD card, a card of a locked screen interface (a locked screen card), a card of a leftmost screen (a leftmost screen card), a card of a main interface (a main interface card), a status bar capsule, a floating capsule, and a notification of a notification bar interface. When detecting that the very important and very urgent information needs to be pushed, the mobile phone may display the information by using the dynamic pop-up window card, to ensure that the information can effectively reach the user. In addition, if the mobile phone is displaying the AOD interface, an AOD card corresponding to the information may be displayed on the AOD interface. If the mobile phone is displaying the leftmost screen, a card corresponding to the information may be displayed on the leftmost screen. If the mobile phone is displaying the main interface, a card corresponding to the information may be further displayed on the main interface. After an operation of indicating the user to cancel display of the dynamic pop-up window card is detected, the user may further pay attention to the foregoing very important and very urgent information through the card displayed on the AOD interface (or the leftmost screen or the main interface). In another example, after display of the dynamic pop-up window card is canceled, the mobile phone may further display state (progress) information of the very important and very urgent information through the status bar capsule. Alternatively, an entry for viewing the very important and very urgent information is displayed through the floating capsule.

Still as shown in FIG. 1, for the non-important and non-urgent information, there are few selectable pushing forms, for example, only the card on the leftmost screen is included. In this way, for the non-important and non-urgent information, the target pushing form that can be preconfigured by the mobile phone is the card on the leftmost screen. In an actual running process of the mobile phone, when it is detected that the non-important and non-urgent information needs to be pushed, the information is pushed through the card on the leftmost screen. In this scenario, after the mobile phone displays the leftmost screen in response to a user operation, attention may be payed to the information. In this way, frequent reminders for the user to view the information are avoided, which causes interference to the user.

In addition, FIG. 1 further shows selectable pushing forms corresponding to other types of information, and details are not described herein again.

The following describes, through a plurality of common scenarios, a process in which the mobile phone pushes information in various pushing forms.

A scenario in which the user performs on-line ride-hailing by using the mobile phone is as follows: After the mobile phone detects a ride-hailing traveling operation that is performed and indicated by the user, for example, the mobile phone detects that the user configures a traveling trip, and taps a functional control indicating to match a vehicle, a corresponding ride-hailing notification may be pushed to the user according to a procedure of an online ride-hailing service at one or more service procedure nodes, for example, procedure nodes such as a suitable vehicle is matched, a vehicle is to reach or has reached an origin specified by the user, a passenger has got on the vehicle, and the vehicle reaches a destination specified by the user. A ride-hailing notification corresponding to the procedure node "a suitable vehicle is matched" may include content such as appearance information, license plate information, and driver information of the traveling vehicle. A ride-hailing notification corresponding to the procedure node "a vehicle is to reach or has reached an origin specified by the user" includes license plate information, appearance information, and driver information of the traveling vehicle, a road condition during the traveling vehicle heading for the origin, estimated duration 1 for reaching the origin by the traveling vehicle, and the like. A ride-hailing notification corresponding to the procedure node "a passenger has got on the vehicle" includes license plate information, appearance information, driver information, and estimated duration for reaching the destination. A ride-hailing notification corresponding to the procedure node "the vehicle reaches a destination specified by the user" includes a trip ending reminder, vehicle fare settlement information, and the like.

The ride-hailing notification corresponding to the node "a vehicle is to reach or has reached an origin specified by the user" is used as an example. The ride-hailing notification corresponding to "a vehicle is to reach or has reached an origin specified by the user" is very urgent and important information, and selectable pushing forms include: the card on the locked screen interface, the card on the main interface, the card on the leftmost screen, the card on the notification bar interface, the dynamic notification card, the status bar capsule, the floating capsule, and the like. In addition, when the mobile phone enables an AOD function, the selectable pushing forms further include: the AOD card. It may be understood that, when the AOD function is enabled, after a display screen of the mobile phone is off, at least one type of information may be displayed in a partial area of the display screen without lighting up the entire display screen. For example, time, an animation, and the like are displayed in the partial area of the display screen.

In some embodiments, the mobile phone may select, from the selectable pushing forms, a pushing form having the highest access efficiency, for example, the dynamic notification card, to push the ride-hailing notification. In some other embodiments, the mobile phone may flexibly select one or more pushing forms from the selectable pushing forms according to an actual display scenario, to push the ride-hailing notification.

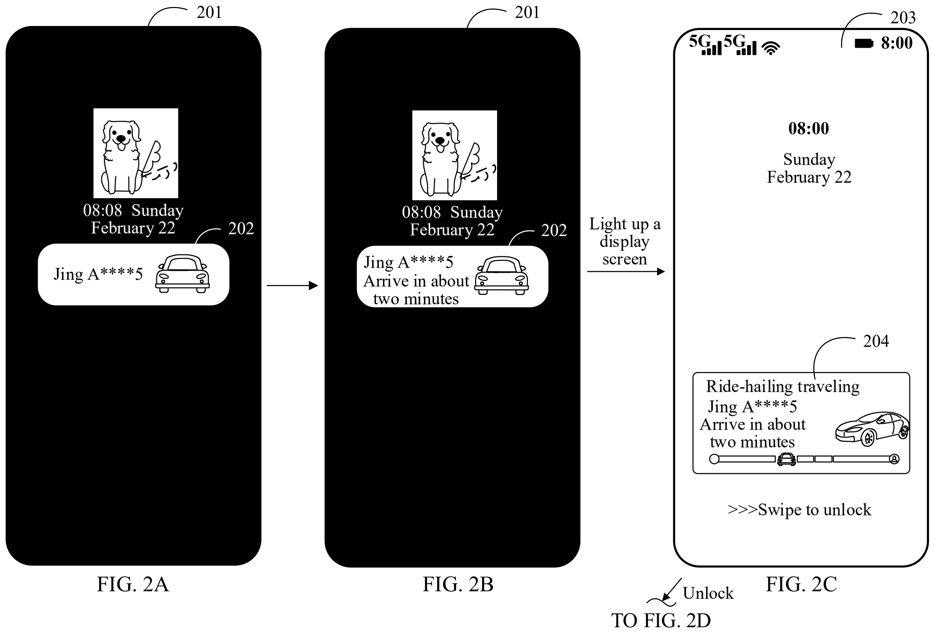

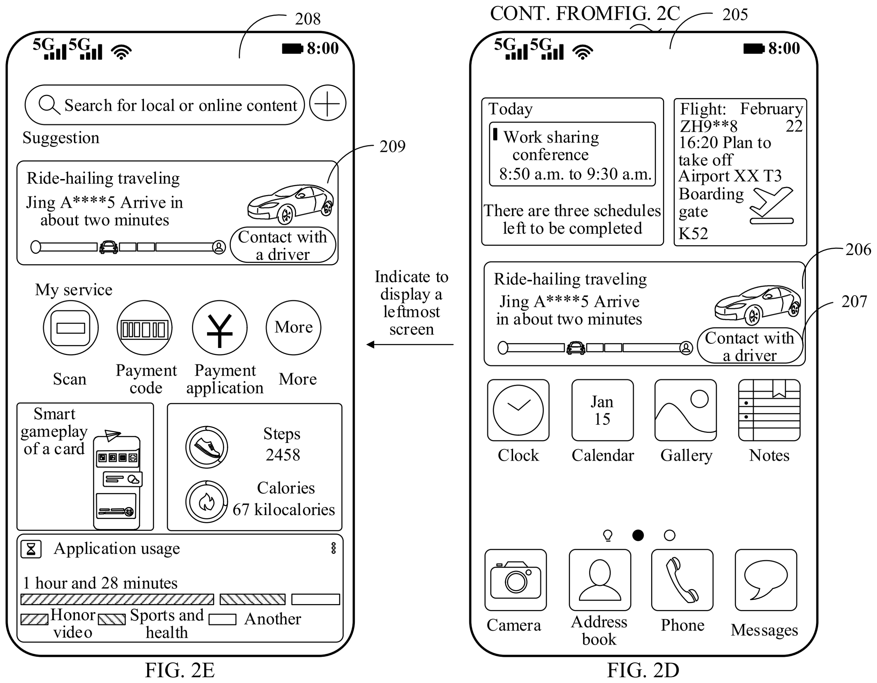

In one exemplary scenario, after the mobile phone detects a ride-hailing traveling operation that is performed and indicated by the user, and matches a vehicle (for example, referred to as a traveling vehicle) needed for traveling for the user, the mobile phone may receive a real-time location of the traveling vehicle. The mobile phone detects a screen-off operation that is performed and indicated by the user, for example, an operation of tapping a power key of the mobile phone, and may display an AOD interface 201 shown in FIG. 2A to FIG. 2E. The AOD interface 201 includes an AOD card 202. Matched vehicle information is displayed on the AOD card 202. In addition, before displaying the AOD card 202, the mobile phone may also display a dynamic notification card 302. After display of the dynamic notification card 302 is canceled, the foregoing AOD card 202 is displayed.

After the AOD interface 201 is displayed, the mobile phone continues to receive the real-time location of the traveling vehicle. When a distance between the real-time location of the traveling vehicle and the origin specified by the user is less than a distance value 1, the mobile phone determines that the current procedure node is "a vehicle is to reach or has reached an origin specified by the user". In addition, in response to a case in which the distance between the real-time location of the traveling vehicle and the origin specified by the user is less than the distance value 1, the mobile phone may further update display content on the AOD card 202, for example, increase estimated duration for reaching the pick-up point.

The AOD card 202 is used to present the ride-hailing notification. The AOD card 202 may include key content of the ride-hailing notification, for example, the license plate information of the traveling vehicle and the estimated duration for reaching the pick-up point. Through the AOD card 202, when the user views the AOD interface, the user is guided to pay attention to "a vehicle is to reach or has reached an origin specified by the user".

Then, the mobile phone detects a screen-on operation that is performed and indicated by the user, for example, an operation of tapping the display screen that is performed by the user, and the mobile phone may light up the entire display screen and display the locked screen interface 203 shown in FIG. 2A to FIG. 2E.

The locked screen interface 203 includes a locked screen card 204. The locked screen card 204 is also used to present the ride-hailing notification. Compared with the ride-hailing notification displayed on the AOD card 202, the ride-hailing notification displayed on the locked screen card 204 includes more key content. For example, in addition to the license plate information of the traveling vehicle, the estimated duration 1 is further included. The estimated duration 1 is the estimated duration needed by the traveling vehicle to reach the origin configured by the user.

In addition, when the AOD card 202 is displayed, in response to an operation of tapping the AOD card 202 by the user, the mobile phone may also light up the entire display screen, and display the locked screen interface 203 shown in FIG. 2A to FIG. 2E. The locked screen interface 203 includes the locked screen card 204.

In some embodiments, in response to an unlocking operation that is performed and indicated by the user, the mobile phone may display the main interface 205 shown in FIG. 2A to FIG. 2E. The main interface 205 may include a main interface card 206. The main interface card 206 is also a card used to present the ride-hailing notification. Compared with the locked screen card 204, the main interface card 206 includes the key content of the ride-hailing notification, and further includes a function entry for processing the ride-hailing notification, for example, a control 207 indicating to contact a driver of the traveling vehicle. The mobile phone may display, in response to an operation performed by the user on the control 207, a detail interface including contact information of the driver of the traveling vehicle, or directly call a telephone number reserved by the traveling driver.

It may be understood that, the user may process the ride-hailing notification through the main interface card 206. In addition, a main interface card 207 is displayed only on the main interface 205. To some extent, when interference to normal use of the mobile phone by the user is avoided, man-machine interaction efficiency for processing the ride-hailing notification is improved.

In some embodiments, the mobile phone may display, during display of the main interface 205, a leftmost screen 208 shown in FIG. 2A to FIG. 2E in response to an operation of viewing the leftmost screen that is performed and indicated by the user, for example, in response to a right-swiping operation performed by the user. The leftmost screen 208 may also include a leftmost screen card 209 used to present the ride-hailing notification. The leftmost screen card 209 may prompt the user to pay attention to the ride-hailing notification when the user browses the leftmost screen.

In addition, the ride-hailing notification corresponding to "a vehicle is to reach or has reached an origin specified by the user" is a ride-hailing notification whose state may be updated in real time. Correspondingly, display content of a card (for example, the locked screen card 204, the main interface card 206, or the leftmost screen card 209) used to display the ride-hailing notification may also be dynamically updated. For example, the estimated duration 1 is displayed on the locked screen card 204, the main interface card 206, and the leftmost screen card 209. The estimated duration 1 may be shortened as the traveling vehicle approaches the origin. Display of the estimated duration 1 is canceled until the vehicle reaches the origin, and an identifier indicating that the vehicle has reached is displayed.

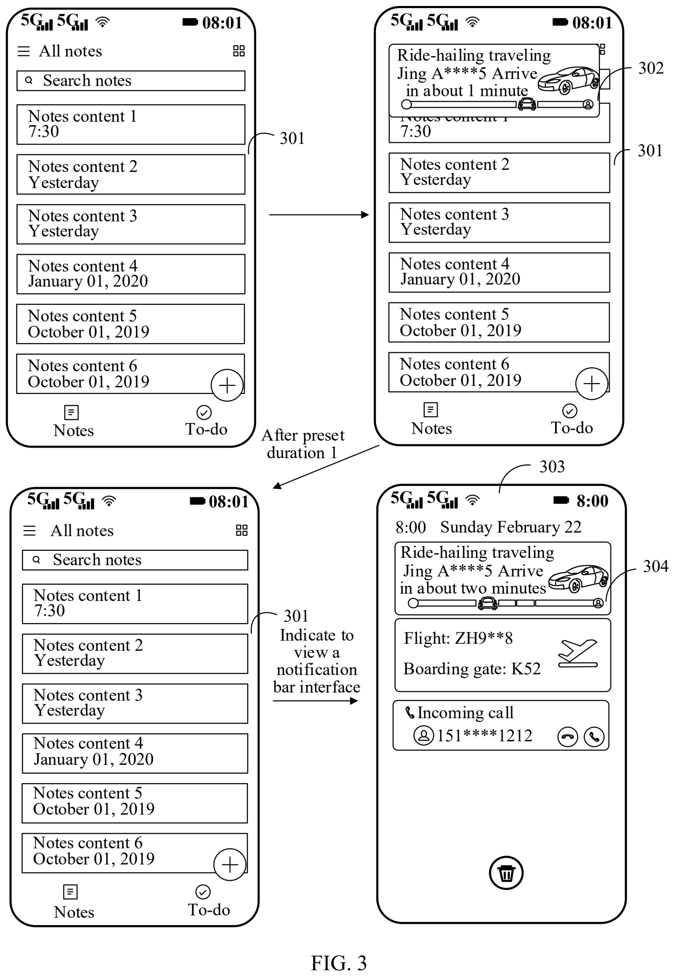

In another exemplary scenario, after the mobile phone detects a ride-hailing traveling operation that is performed and indicated by the user, and matches a vehicle (for example, referred to as a traveling vehicle) needed for traveling for the user, the mobile phone may receive a real-time location of the traveling vehicle. Then, the user may normally use another application in the mobile phone. For example, in response to an operation of running a memo application that is performed and indicated by the user, the mobile phone may run the memo application, and display an application interface provided by the memo application, for example, a note interface 301 in FIG. 3.

After the note interface 301 is displayed, the mobile phone continues to receive the real-time location of the traveling vehicle. When a distance between the real-time location of the traveling vehicle and the origin specified by the user is less than a distance value 1, the mobile phone determines that the current procedure node is "a vehicle is to reach or has reached an origin specified by the user". In addition, in response to a case in which the distance between the real-time location of the traveling vehicle and the origin specified by the user is less than the distance value 1, the mobile phone may further display the dynamic notification card 302 on the note interface 301. The dynamic notification card 302 may be used to present the ride-hailing notification, for example, display key content of the ride-hailing notification, such as the license plate information and the estimated duration 1.

In some embodiments, when the display duration of the dynamic notification card 302 reaches the preset duration 1 (for example, three seconds), and when an operation of processing the dynamic notification card 302 that is performed and indicated by the user is not received, the mobile phone may cancel display of the dynamic notification card 302.

After display of the dynamic notification card 302 is canceled, the mobile phone may display a notification interface 303 shown in FIG. 3 in response to an operation of viewing the notification bar that is performed and indicated by the user, for example, a downward swiping operation performed by the user on the note interface 301. The notification interface 303 displays a notification that has already been pushed to the user and that the user has not indicated to process. For example, when the user does not indicate to process the ride-hailing notification, the notification interface 303 may include a notification card 304 used to present the ride-hailing notification.

In addition, after display of the dynamic notification card 302 is canceled, the mobile phone may further continue to push the ride-hailing notification to the user by displaying the capsule on the status bar.

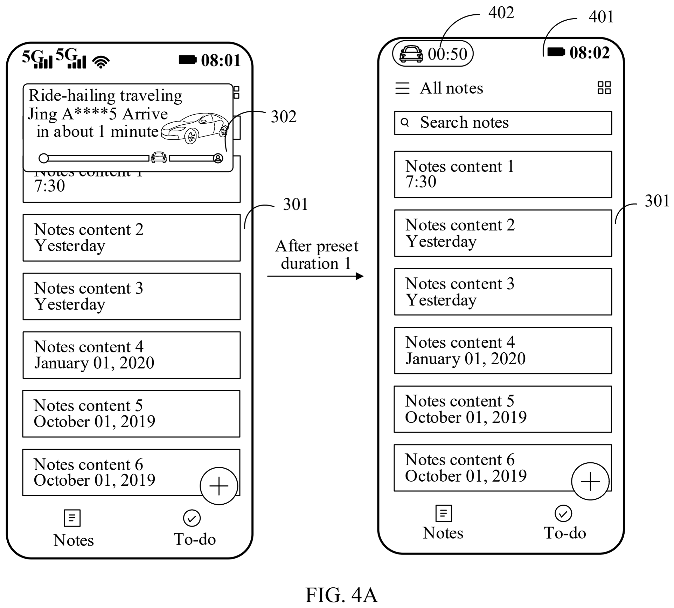

For example, as shown in FIG. 4A, after display of the dynamic notification card 302 is canceled, a status bar capsule 402 corresponding to the ride-hailing notification is displayed on the status bar 401. It may be understood that, the estimated duration 1 corresponding to the ride-hailing notification may vary with the distance between the traveling vehicle and the origin. The status bar capsule 402 may display the estimated duration 1 corresponding to the ride-hailing notification in real time, so that the user learns a real-time progress before the traveling vehicle reaches the origin.

In another embodiment, after the user indicates the mobile phone to enable a service of a specific type (such as a translation service), when identifying a scenario applicable to the service again, the mobile phone may display the floating capsule and push the service to the user.

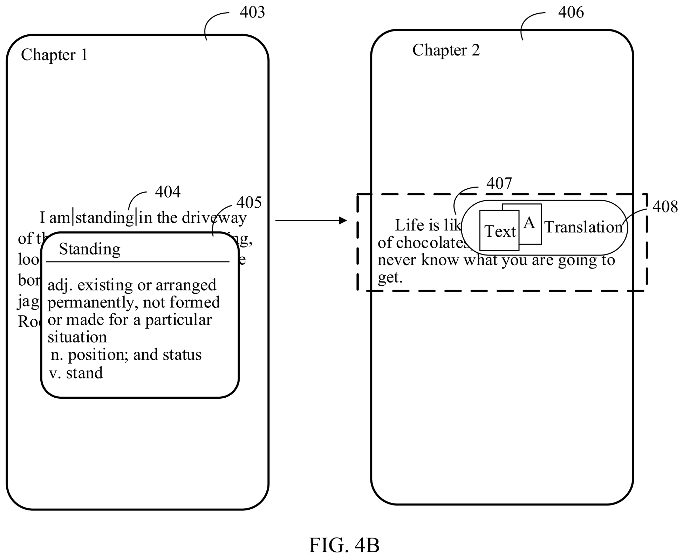

As shown in FIG. 4B, the electronic device displays an application interface 403 provided by a novel application, and displays a translation window 405 in response to an operation of translating a word 404 (standing) that is performed and indicated by the user. Translated content corresponding to the word 404 is displayed in the foregoing translation window 405. In this scenario, it may be determined that the user enables the translation service.

Then, the electronic device displays an application interface 406 in response to a user operation. The application interface 406 may be an application interface provided by a novel application, or may be an application interface provided by another application. When English text 407 is included in the application interface 406, the electronic device may identify a current scenario in which a translation service is used, and the electronic device may display a floating capsule 408. The floating capsule 408 is used to recommend the translation service to the user.

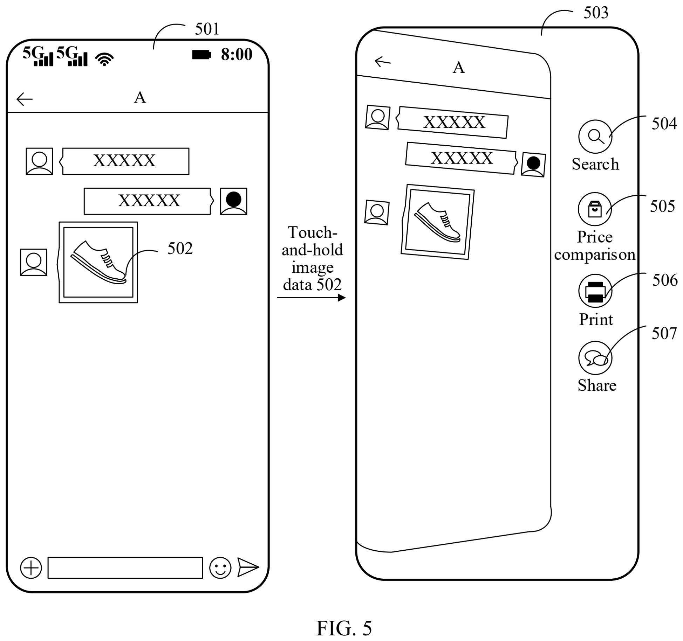

A scenario in which the user browses an image by using a mobile phone is as follows: In response to an operation of selecting a target image by the user, the mobile phone may evaluate, according to the target image, an application service that the user currently needs to use, for example, the application service is referred to as a target service, and push the target service to the user. As shown in FIG. 5, the mobile phone displays a chat application interface 501. The application interface 501 includes a plurality of pieces of chat records, for example, image data 502 sent by a contact A. In response to an operation of touching-and-holding the image data 502 by the user, the mobile phone may determine the image data 502 as the target image, and evaluate, according to the target image, a target application service that the user currently needs to use.

For example, the target application service includes an application service used for processing the image data, such as an image sharing service, an image printing service, and a search service. For another example, the target application service further includes an application service determined according to content of the target image. For example, shoes are displayed in the image data 502. The target application service may include an application service used for querying a price of the shoes, for example, the application service referred to as a price comparison service.

In some embodiments, in response to determining the target application service, the mobile phone may display a portal interface 503. The portal interface 503 includes a search icon 504, a price comparison icon 505, a print icon 506, and an analysis icon 507.

For example, in response to an operation of tapping the search icon 504 by the user, the mobile phone may enable the search service to search for data related to the image data 502. In response to an operation of tapping the price comparison icon 505 by the user, the mobile phone may enable the price comparison service, to query price information of the shoes in the image data 502. In response to an operation of tapping the print icon 506 by the user, the mobile phone may send the image data 502 to a printer, to indicate the printer to print the image data 502. In response to an operation of tapping the sharing icon 507 by the user, the mobile phone may display a manner used to share the image data 502.

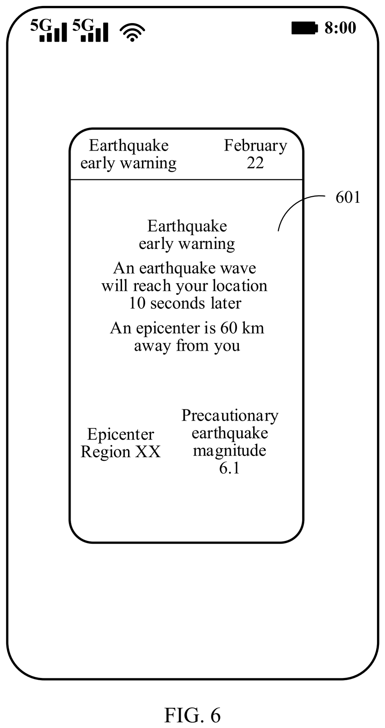

In some embodiments, for the very important and very urgent information, such as an earthquake early warning notification, if a case in which a dynamic pop-up window is used to push the earthquake early warning notification is preset, the mobile phone receives an earthquake early warning notification from an earthquake early warning server. As shown in FIG. 6, the mobile phone may directly display a dynamic pop-up window card 601. The dynamic pop-up window card 601 includes key information of the earthquake early warning notification, such as duration needed by earthquake waves to reach a current location of the user, an epicenter location, a distance between the epicenter and the current location of the user, and an earthquake level. In some other embodiments, for the very important and very urgent information such as the earthquake early warning notification, after the dynamic pop-up window is used for pushing, an adaptive pushing form may be further selected according to a current display scenario of the mobile phone, to continue pushing the earthquake early warning notification. For example, the mobile phone is displaying an AOD interface, and selects an AOD card to continue pushing the earthquake early warning notification.

In the foregoing embodiment, the mobile phone may push the information to the user in one or more pushing forms, to ensure that the information can effectively reach the user. In fact, whether the information can effectively reach the user is further affected by other factors, for example, whether the user is using the mobile phone. To improve efficiency of reaching the user by the information in a period in which the user does not use the mobile phone, the mobile phone may further push the information to the user in collaboration with a wearable device of the user, such as a smart watch. The foregoing smart watch may be a smart watch with a circular dial, or may be a smart watch with a square dial. This is not specifically limited in this embodiment of this application. In subsequent embodiments, the smart watch with the circular dial is mainly used as an example for description.

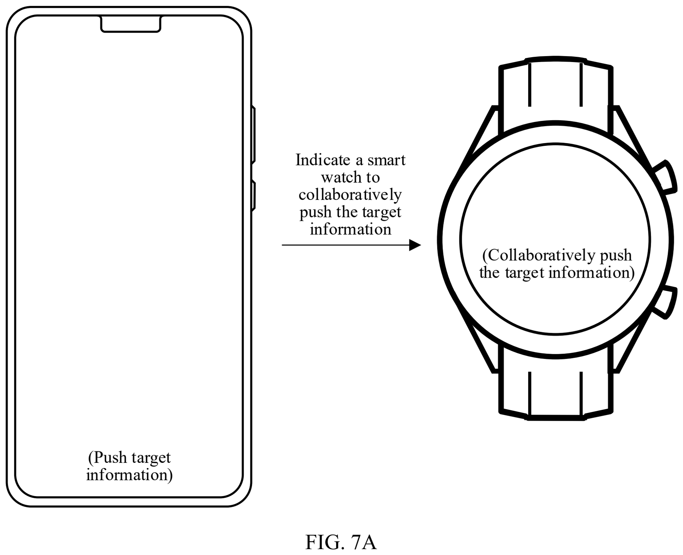

In some embodiments, as shown in FIG. 7A, after a connection is established between the mobile phone and the smart watch, the mobile phone determines the target information that needs to be pushed to the user, and in addition to pushing the target information by using the display screen configured by the mobile phone, the mobile phone may further indicate the smart watch to push the target information. For example, the mobile phone may send a collaborative push notification to the smart watch. In response to the collaborative push notification from the mobile phone, the smart watch may push the target information to the user in a pushing form such as an icon, a card, and/or a dynamic full-screen pop-up window.

For example, in response to the collaborative push notification from the mobile phone, the smart watch may display an icon representing the target information on a smart interface and/or a leftmost screen. For example, when the target information is an application, the icon may be an application icon of the application. For another example, when the target information is an application service, the icon may be a service icon corresponding to the application service.

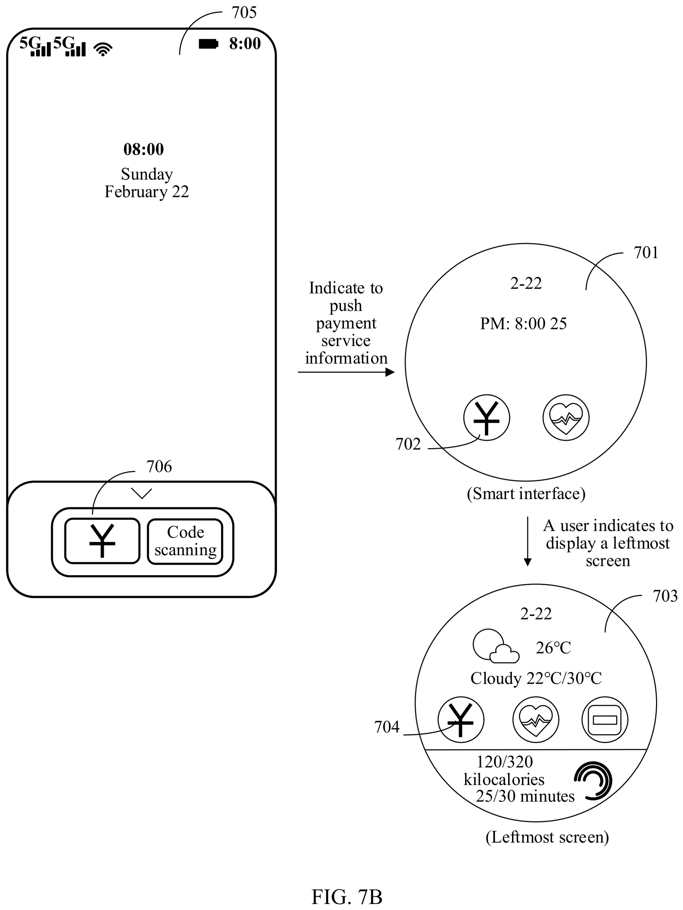

An example in which the target information is payment service information is used. As shown in FIG. 7B, when the mobile phone displays a locked screen interface 705, if it is determined that the payment service information needs to be pushed, the mobile phone may display an icon 706 on the locked screen interface 705.

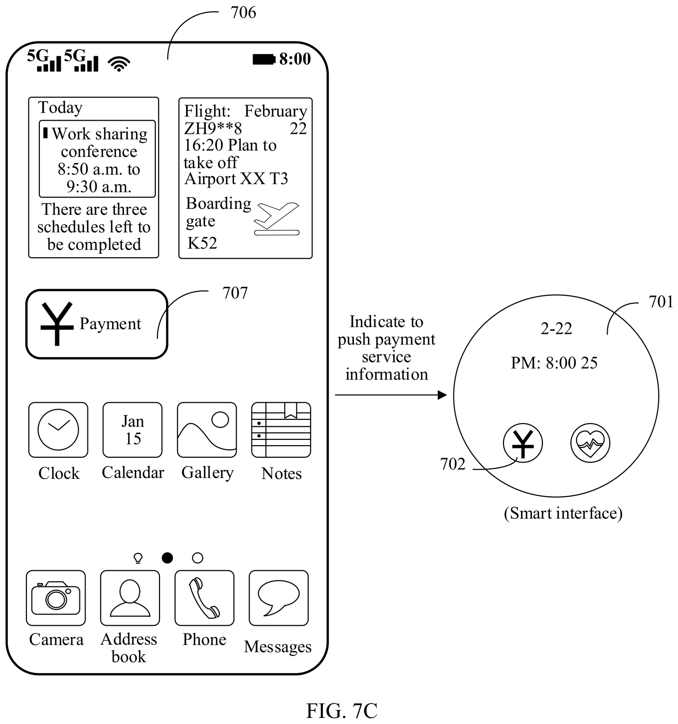

As shown in FIG. 7C, when the mobile phone displays a main interface 706, if it is determined that the payment service information needs to be pushed, the mobile phone may also display a service entry icon 707 of a payment service on the main interface 706.

When the mobile phone displays the icon (such as the icon 706 or the service entry icon 707) of the payment service, if the user taps the icon 706 (or the service entry icon 707), the mobile phone may display, in response to the operation, an application interface corresponding to the payment service.

In addition, after determining that the payment service information needs to be pushed, the mobile phone may further indicate the smart watch to push the payment service information, for example, send the collaborative push notification to the smart watch. When the smart watch displays the smart interface 701, in response to the collaborative push notification from the mobile phone, the smart watch may display a service icon 702 of the payment service on the smart interface 701.

If a payment program used for providing the payment service is installed in the smart watch, in response to tapping the service icon 702, the smart watch may display the application interface of the payment program, for example, an interface including payment key information. If no payment program is installed in the smart watch, the smart watch may display prompt information, and the prompt information may prompt the user to enable a payment service by operating the mobile phone.

In addition, during the real smart interface period, the smart watch may further display the leftmost screen 703 of the watch in response to the operation performed by the user. The leftmost screen 703 includes a service icon 704. Both the service icon 704 and the service icon 702 on the smart interface 701 are service icons corresponding to the payment service.

For another example, in response to the collaborative push notification from the mobile phone, the smart watch may further display, on the smart interface, the notification bar interface, and/or the leftmost screen, a card used to present the target information. For example, when the target information is a notification message, the card may display key content of the notification message.

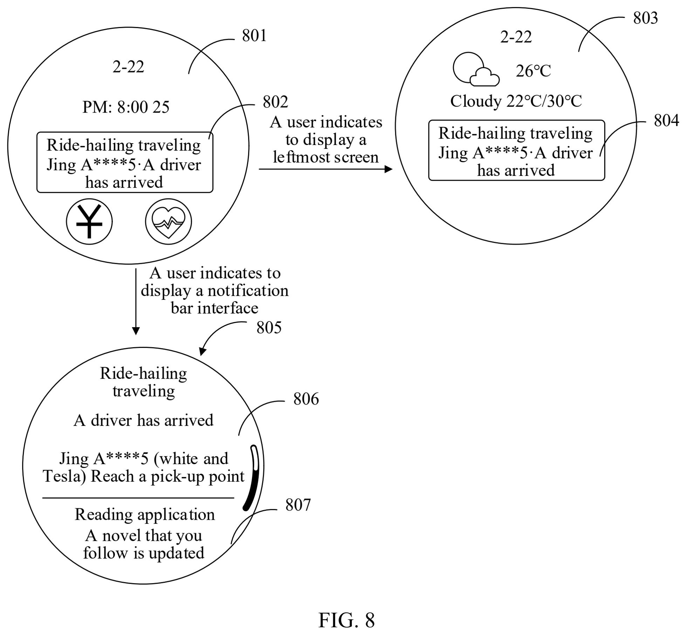

An example in which the target information is a ride-hailing message is used. As shown in FIG. 8, when the smart watch displays a smart interface 801, in response to the collaborative push notification from the mobile phone, the smart watch may display a push card 802 on the smart interface 801. The push card 802 displays key content of a ride-hailing notification, and is used to prompt the user to pay attention to the ride-hailing notification. In addition, in response to the user tapping the push card 802, the smart watch may display a full-screen display interface corresponding to the ride-hailing notification. The full-screen display interface includes detailed content of the ride-hailing notification.

In some examples, during display of the smart interface 801, the leftmost screen 803 may be further displayed in response to the operation performed by the user. The leftmost screen 803 may also include a push card 804. The push card 804 displays the key content of the ride-hailing notification, and is used to prompt the user to pay attention to the ride-hailing notification. In response to the user tapping the push card 804, the smart watch may display the full-screen display interface corresponding to the ride-hailing notification.

In some examples, during display of the smart interface 801, a notification bar interface 805 may be further displayed in response to the operation performed by the user. The notification bar interface may also include a notification card 806. The notification card 806 displays the key content of the ride-hailing notification. Compared with the card 804, the notification card 806 displays more key content. In addition, the notification bar interface 805 may further include another unprocessed notification card, such as a notification card 807. The notification card 807 displays key content of an application notification of a reading application. Certainly, in response to a swiping operation performed by the user on the notification bar interface 805, the smart watch may further display another hidden and unprocessed notification card.

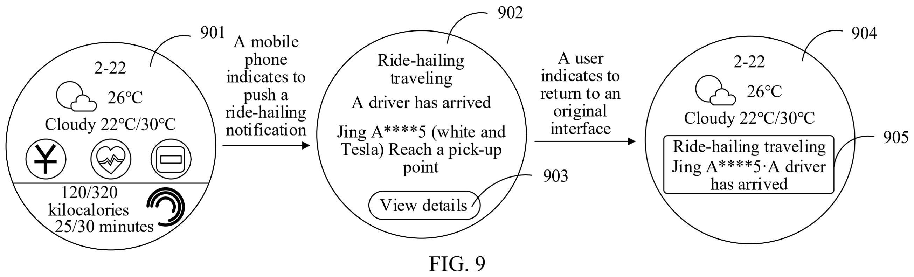

For another example, in response to the collaborative push notification from the mobile phone, the smart watch may further display a dynamic full-screen pop-up window. As shown in FIG. 9, when displaying a leftmost screen 901, the smart watch receives the collaborative push notification from the mobile phone, and the smart watch may be controlled to push a ride-hailing notification based on the collaborative push notification. In response to the collaborative push notification, the smart watch may display a dynamic full-screen pop-up window 902. The dynamic full-screen pop-up window 902 includes key content corresponding to the ride-hailing notification and a detail control 903. In response to an operation of tapping the detail control 903, a full-screen display interface of the ride-hailing notification may be displayed. The full-screen display interface includes detailed content of the ride-hailing notification.

In addition, during display of the dynamic full-screen pop-up window 902, in response to an operation of returning to an original interface that is performed and indicated by the user, for example, an upward swiping operation, the smart watch may further display a leftmost screen 904. In comparison to the leftmost screen 901, a push card 905 is newly displayed on the leftmost screen 904. In response to an operation of tapping the push card 905, the full-screen display interface corresponding to the ride-hailing notification may be displayed.

It may be understood that, display space corresponding to a display screen of the smart watch is relatively small, and a persistent interface usually needs to be preconfigured. The persistent interface is a user interface that is displayed by default after the screen of the smart watch is lightened up. The persistent interface is also a user interface that is displayed by default in response to the operation of returning that is performed and indicated by the user when the smart watch displays another interface.

In some embodiments, the persistent interface may be one of a smart interface, a leftmost screen, and a customized dial interface. The customized dial interface may be a dial interface generated by the smart watch according to an image (a background image), a functional control, and a time display manner (time displayed in a numerical form or time displayed in a pointer form) that is selected by the user, or may be a dial interface provided by a third-party application.

In addition, an icon and a card (a push card and a notification card) that are used to push information need to be displayed on the smart interface and/or the leftmost screen. When the persistent interface is the customized dial interface, the user needs to manually switch an interface displayed by the smart watch, for example, switch from the customized dial interface to the smart interface (or the leftmost screen), to view the pushed target information.

Apparently, in this scenario, efficiency of reaching the user by the target information is still not high. In addition, man-machine interaction efficiency of viewing the pushed target information by the user through the smart watch is also not high. In addition, if all the target information is pushed by using the dynamic full-screen pop-up window, interference to the user is also relatively great.

To improve the foregoing problem, an embodiment of this application provides an information pushing method, which may be applied to a wearable device. An example in which the wearable device is a smart watch is used. In a scenario in which a mobile phone pushes target information in collaboration with the smart watch, the smart watch may display a floating capsule used to push the target information, to ensure that when the target information reaches a user, interference to the user is reduced, and man-machine interaction efficiency of processing the target information by the user through the smart watch is also improved.

Implementation details of pushing the target information to the user by the mobile phone in collaboration with the smart watch are described below with reference to the accompanying drawings.

In some embodiments, the target information may be classified into service information (first-type target information) with a deterministic intention and service information (second-type target information) without a deterministic intention.

For example, the first-type target information refers to information for which the user has a clear viewing intention, for example, information whose corresponding pushing confidence is greater than a first value (90%) is evaluated. The pushing confidence may represent a probability that the target information is information actually needed by the user. Generally, the user indicates information that needs to be viewed (for example, information that is triggered to be pushed after the user configures order information), and the corresponding pushing confidence is greater than the first value. For example, the information may include ride-hailing notification information, navigation notification information, takeaway delivery information, game information, a trip reminder, and the like.

For example, the second-type target information refers to information for which the user does not show a viewing intention, and information that the mobile phone predicts that the user may need to view. For example, information whose corresponding pushing confidence is not greater than a first value (90%) is evaluated. In other words, a pushing confidence of the second-type target information is less than a pushing confidence of the first-type target information. For example, the information may include access control service information, attendance checking reminder information, payment service information, metro service information, and express pick-up information.

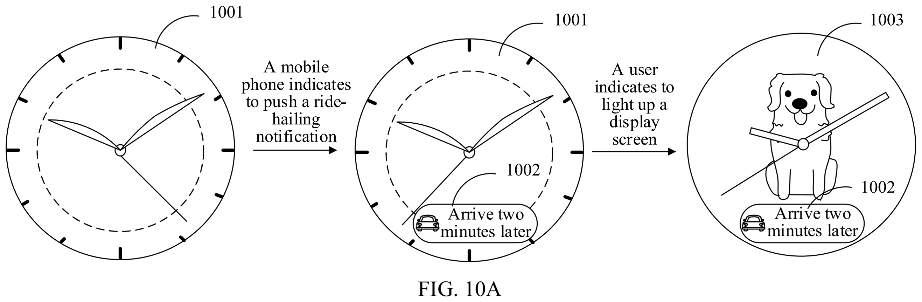

As shown in FIG. 2A to FIG. 2E and FIG. 10A, when both the mobile phone and the smart watch display AOD interfaces, for example, the mobile phone displays an AOD interface 201, and the smart watch displays an AOD interface 1001. In response to determining that the target information is the first-type target information (for example, a ride-hailing notification), the mobile phone may display an AOD card 202 and send a collaborative push notification 1 to the smart watch. In response to the collaborative push notification 1, the smart watch displays a floating capsule 1002 on the AOD interface 1001. The floating capsule 1002 displayed on the smart watch and the AOD card 202 displayed on the mobile phone are used to push a same ride-hailing notification.

In the example in FIG. 10A, the ride-hailing notification is first information, the AOD interface 1001 may be referred to as a first interface, and the floating capsule 1002 may be referred to as a first capsule. The collaborative push notification 1 is a first indication, and may carry an identifier representing pushing of the first information.

In some embodiments, the floating capsule 1002 may be globally displayed. For example, in response to an operation of lighting up the smart watch by the user, the smart watch may display a persistent interface. An example in which the persistent interface is a customized dial interface (for example, a dial interface 1003 shown in FIG. 10A) is used. The floating capsule 1002 is also displayed on a dial interface 1003 of the smart watch. When it is ensured that the target information can reach the user, normal use of the smart watch by the user is not affected. In the example in FIG. 10A, the dial interface 1003 may be referred to as a second interface. The foregoing operation of lighting up the smart watch may trigger the smart watch to switch display interfaces, for example, switch to display the dial interface 1003 from the AOD interface 1001. Correspondingly, the foregoing operation of lighting up the smart watch may be referred to as a first operation. The first operation is an operation of switching between different user interfaces. A specific form of the first operation is not limited.

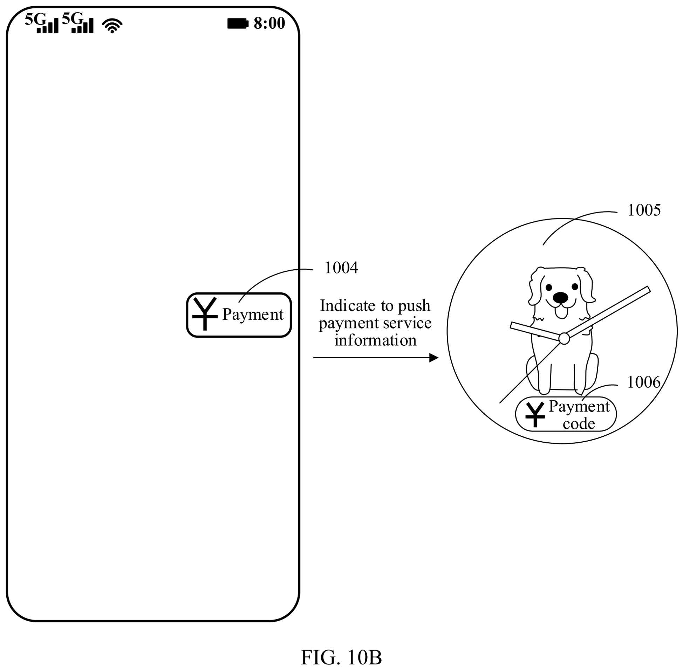

For another example, FIG. 10B is used as an example. When displaying any interface, the mobile phone identifies a scenario in which the second-type target information (for example, the payment service information) needs to be pushed. The mobile phone may display a floating capsule 1004 used to push a payment service. Then, the mobile phone may indicate the smart watch to push the payment service information. For example, the smart watch displays a floating capsule 1006 on a dial interface 1005.

In addition, the foregoing floating capsule is also a function entry for the user to quickly process the target information. For example, in response to an operation of tapping the floating capsule 1002 by the user, the smart watch may display a full-screen display interface corresponding to the ride-hailing notification.

In some embodiments, the floating capsule may include a persistent capsule and a transient capsule. The persistent capsule and the transient capsule have the following differences:
1. Types of the pushed target information are different.

For example, the persistent capsule may be used to push the first-type target information. The transient capsule may be used to push the second-type target information.

In an implementation, the mobile phone may distinguish, according to an importance degree and an urgency degree of the target information, whether the target information belongs to the first-type target information or belongs to the second-type target information.

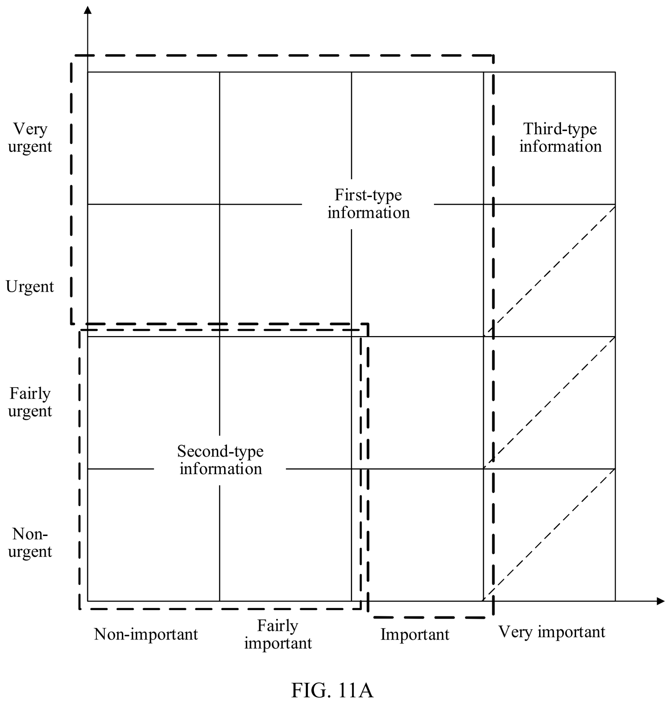

As shown in FIG. 11A, information whose importance degree is fairly important (or non-important) and urgency degree is fairly urgent (or non-urgent) may be determined as the second-type target information.

As shown in FIG. 11A, information whose importance degree is important and urgency degree is urgent (or very urgent) may be determined as the first-type target information.

In addition, types of the pushed information further include a third type, and third-type target information refers to information that needs to reach the user. As shown in FIG. 11A, information whose importance degree is very important may be determined as the third-type target information. For the third-type target information, the mobile phone may indicate the smart watch to push the third-type target information in a manner of a dynamic full-screen pop-up window, until the user completes processing of the target information.

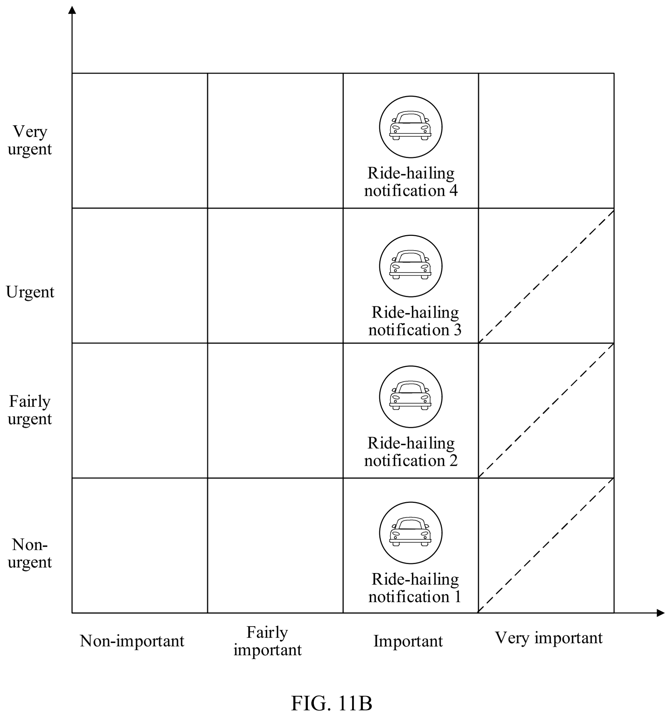

FIG. 11B shows an importance degree and an urgency degree of a ride-hailing notification that needs to be pushed to the user at different procedure nodes in a process of performing an online ride-hailing service. In a process of performing the online ride-hailing service, at different procedure nodes, ride-hailing notifications that need to be pushed to the user include: a ride-hailing notification 1 indicating that a trip ends, a ride-hailing notification 2 indicating that a trip is in progress, a ride-hailing notification 3 indicating that matching on a traveling vehicle succeeds, and a ride-hailing notification 4 indicating that a vehicle is to reach or has reached an origin specified by the user. As shown in FIG. 11B, it may be determined that the ride-hailing notification 1 to the ride-hailing notification 4 all belong to the first-type information.

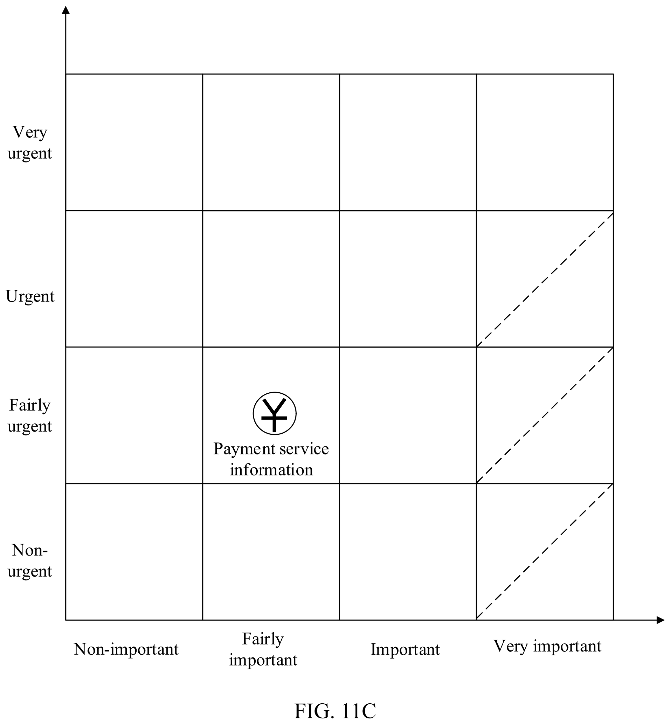

In addition, FIG. 11C shows that an importance degree of the payment service information is fairly important, and an urgency degree of the payment service information is also fairly important. As shown in FIG. 11C, it may be determined that the foregoing payment service information belongs to the second-type information.

In another implementation, the mobile phone may determine, according to a generation scenario of the target information, whether the target information belongs to the first-type information or belongs to the second-type information.

For example, if the target information is information determined according to a usage habit of the user, the target information belongs to the second-type information. For example, the usage habit of the user that is recorded by the mobile phone includes: There is a high probability that the user enables a ride code service at 8 a.m. on a workday. According to the foregoing usage habit of the user, at 8 a.m. on every workday, the mobile phone can identify a case in which the target information that needs to be pushed is the ride code service, and determine that the target information (the ride code service) belongs to the second-type information.

For another example, if the target information is information that needs to be pushed by the mobile phone in a process in which the mobile phone performs one or more services, the target information belongs to the first-type information. The one or more services may be services that the user actively triggers the mobile phone to perform. For example, a ride-hailing traveling operation that is performed and indicated by the user may trigger the mobile phone to perform an online ride-hailing service, and the online ride-hailing service belongs to the one or more services. Correspondingly, in a process in which the mobile phone performs the online ride-hailing service, the ride-hailing notification that needs to be pushed belongs to the first-type information. For another example, an operation of downloading a file that is performed and indicated by the user may trigger the mobile phone to perform a data downloading service, and the data downloading service belongs to the one or more services. Correspondingly, in a process of performing the data downloading service, download progress information that needs to be pushed also belongs to the first-type information. For another example, an operation of configuring an alarm clock to prompt time that is performed by the user may trigger the mobile phone to perform a periodically reminding service, and the periodically reminding service belongs to the one or more services. In a process in which the periodically reminding service is performed, a time reminding notification that needs to be pushed also belongs to the first-type information.

After determining a type to which the target information belongs, the mobile phone may indicate the smart watch to use the persistent capsule, or display the target information by using the transient capsule. For example, the first indication sent to the smart watch further includes a display attribute, for example, a first attribute value and a second attribute value, of the first capsule used for pushing the target information (for example, the first information). When the first information is predicted information to which the user needs to pay attention, for example, the second-type information, the first capsule corresponds to the first attribute value, and the first attribute value indicates that the first capsule is displayed within a defined time period. When the first information is information that the user indicates to pay attention to, for example, the first-type information, the first capsule corresponds to the second attribute value, and the second attribute value indicates that display duration of the first capsule is not limited.

A scenario in which the mobile phone sequentially indicates the smart watch to push the payment service information and the ride-hailing notification is used as an example. The payment service information belongs to the second-type target information, and the ride-hailing notification belongs to the first-type target information. The mobile phone sends a collaborative push notification 2 to the smart watch, and in response to the collaborative push notification 2, the smart watch pushes the payment service by using the transient capsule.

In an implementation, the collaborative push notification 2 may carry an identifier representing the payment service information and an identifier representing the transient capsule. Correspondingly, in response to the collaborative push notification 2 from the mobile phone, the smart watch may recommend, through the transient capsule, the user to use the payment service.

The mobile phone sends the collaborative push notification 1 to the smart watch, and in response to the collaborative push notification 1, the smart watch pushes the ride-hailing notification by using the persistent capsule. In an implementation, the collaborative push notification 1 may carry the ride-hailing notification and an identifier representing the persistent capsule. Correspondingly, in response to the collaborative push notification 1 from the mobile phone, the smart watch may prompt, through the persistent capsule, the user to use to pay attention to the ride-hailing notification.

2. Different display cancellation conditions.

For example, when the smart watch displays the transient capsule, after display duration of the transient capsule reaches preset duration 2 (for example, referred to as first duration), display of the transient capsule may be canceled. In addition, before the display duration of the transient capsule reaches the preset duration 2, if the smart watch detects an operation performed by the user on the transient capsule, the smart watch may also cancel display of the transient capsule. If the user processes the target information corresponding to the transient capsule through the mobile phone, the smart watch may also cancel display of the transient capsule.

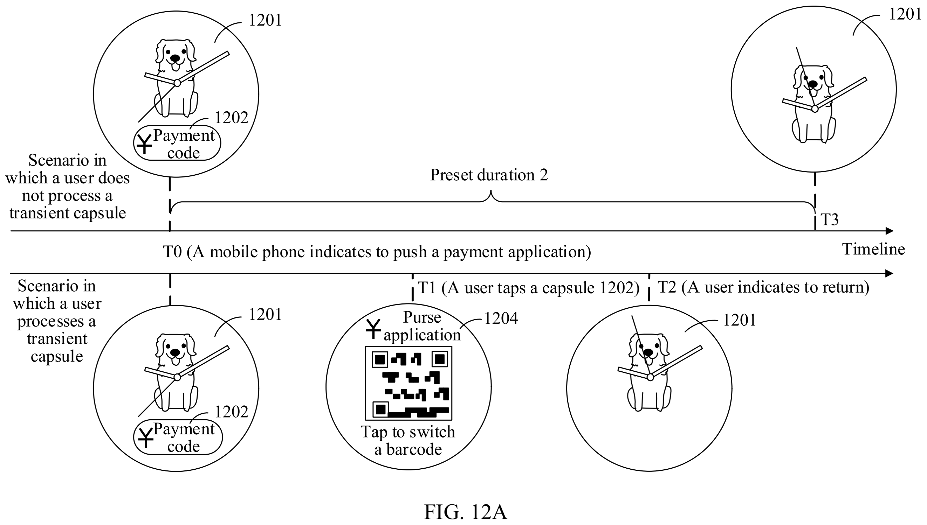

As shown in FIG. 12A, in a period of displaying a dial interface 1201, for example, at a moment T0, in response to a collaborative push notification 2 from the mobile phone, the smart watch may display a capsule 1202. The capsule 1202 includes an icon of a payment service and function descriptions of the payment service. When the display duration of the capsule 1202 reaches the preset duration 2, and an operation performed by the user on the capsule 1202 is not received, for example, at a moment T3, the smart watch cancels display of the capsule 1202.

Further, as shown in FIG. 12A, in a period of displaying the dial interface 1201, for example, at the moment T0, in response to the collaborative push notification 2 from the mobile phone (which may also be referred to as a case in which the mobile phone indicates the smart watch to push payment service information), the smart watch may display the capsule 1202. Before the display duration of the capsule 1202 reaches the preset duration 2, for example, at a moment T1, an operation performed by the user on the capsule 1202 is detected, for example, the capsule 1202 is tapped, and the smart watch may display an application interface 1204 (for example, referred to as a third interface) corresponding to the payment service. The application interface 1204 may provide a service related to payment. After the application interface 1204 is displayed, for example, at a moment T2, in response to an operation of exiting (or returning) that is performed and indicated by the user, for example, the operation is referred to as a second operation, the dial interface 1201 is displayed again. The dial interface 1201 that is displayed again does not include the capsule 1202.

In some other embodiments, if a quantity of times of pushing, by the smart watch, the same target information through the transient capsule is N, and the smart watch does not detect an operation performed by the user on the transient capsule, the smart watch no longer displays the transient capsule corresponding to the target information within a preset time interval, where N is a preconfigured positive integer.

For example, in a scenario in which N is 2, the preset time interval is a time interval between a current time point and 12 p.m. The smart watch receives the collaborative push notification 2 from the mobile phone for the first time, and in response to the collaborative push notification 2, the smart watch pushes the payment service information to the user by using the transient capsule, for example, displays the capsule 1202. During display of the capsule 1202, an operation performed by the user on the capsule 1202 is not detected, and after the display duration of the capsule 1202 reaches the preset duration 2, display of the capsule 1202 is canceled. Then, the smart watch receives the collaborative push notification 2 from the mobile phone for a second time, and in response to the collaborative push notification 2, the smart watch pushes the payment service information to the user again by using the transient capsule, for example, displays the capsule 1202. During display of the capsule 1202 again, the operation performed by the user on the capsule 1202 is not detected, and after duration in which the capsule 1202 is displayed again reaches the preset duration 2, display of the capsule 1202 is canceled again. In this scenario, the smart watch has pushed the payment service information twice through the transient capsule, and does not detect the operation performed by the user on the transient capsule. Correspondingly, on a current day, the smart watch no longer pushes the payment service information to the user through the transient capsule. For example, the smart watch receives the collaborative push notification 2 from the mobile phone for the third time, and may not respond to the collaborative push notification 2. For another example, the smart watch receives the collaborative push notification 2 from the mobile phone for the third time, and in response to the collaborative push notification 2, the smart watch may also push the payment service information to the user in another manner, for example, display a service icon corresponding to the payment service information on the smart interface or the leftmost screen.

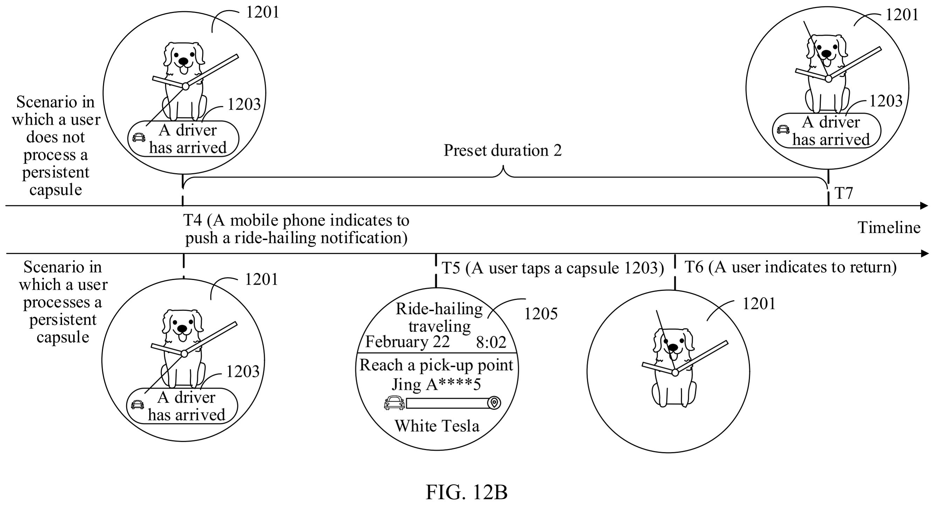

For another example, when the smart watch displays the persistent capsule, if the operation performed by the user on the persistent capsule is not received, the smart watch may always display the persistent capsule. As shown in FIG. 12B, in a period of displaying a dial interface 1201, for example, at a moment T4, in response to a collaborative push notification 1 from the mobile phone, the smart watch may display a capsule 1203. The capsule 1203 includes key content of a ride-hailing notification, for example, ride-hailing progress information. When display duration of the capsule 1203 reaches the preset duration 2, for example, at a moment T7, the smart watch continues to display the capsule 1203.

When the smart watch detects the operation on the persistent capsule, the smart watch may cancel display of the persistent capsule. The operation on the persistent capsule may include an operation of processing target information corresponding to the persistent capsule that is indicated.

Further, as shown in FIG. 12B, in a period of displaying the dial interface 1201, for example, at a moment T4, in response to the collaborative push notification 1 from the mobile phone (which may also be referred to as a case in which the mobile phone indicates the smart watch to push the ride-hailing notification), the smart watch may display the capsule 1203. After displaying the capsule 1203, for example, at a moment T5, in response to detecting the operation performed by the user on the capsule 1203, such as tapping the capsule 1203, the smart watch may display a full-screen display interface 1205 corresponding to the ride-hailing notification. The full-screen display interface 1205 may display detailed content of the ride-hailing notification. After the full-screen display interface 1205 is displayed, for example, at a moment T6, in response to an operation of exiting (or returning) that is performed and indicated by the user, the dial interface 1201 is displayed again. The dial interface 1201 that is displayed again does not include the capsule 1203.

The operation on the persistent capsule may further include an operation of canceling the persistent capsule that is indicated. For example, in a period of displaying the persistent capsule, in response to the operation performed by the user, the smart watch may cancel display of the persistent capsule. The operation of canceling display of the persistent capsule that is indicated may be a downward swiping operation. A start point of a swiping track of the downward swiping operation is located in display space of the persistent capsule, and may be referred to as a downward swiping operation relative to the persistent capsule.

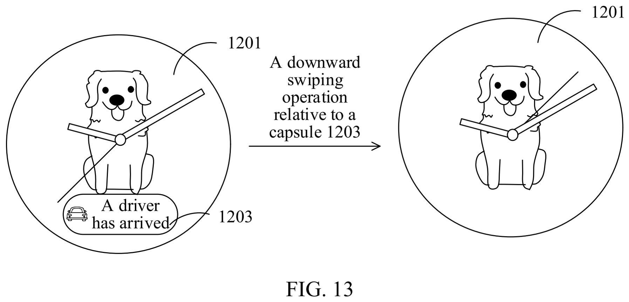

FIG. 13 is used as an example. In a period of displaying the dial interface 1201 including the capsule 1203, in response to a downward swiping operation performed by the user relative to the capsule 1203, the smart watch cancels display of the capsule 1203 on the dial interface 1201.

In some embodiments, when performing a same service, the mobile phone may go through one or more service procedure nodes, and at different service nodes, the mobile phone may indicate the smart watch to push corresponding information. The one or more service procedure nodes include a node marked as a key node and a node marked as an ordinary node. For example, the ride-hailing service includes procedure nodes such as a suitable vehicle is matched, the vehicle is to reach or has reached an origin specified by the user, a passenger has got on the vehicle, and the vehicle reaches a destination specified by the user. That a suitable vehicle is matched and that the vehicle is to reach or has reached an origin specified by the user may be preconfigured as key nodes, and that a passenger has got on the vehicle and that the vehicle reaches a destination specified by the user may be preconfigured as ordinary nodes.

In a process of performing the ride-hailing service, when a ride-hailing notification corresponding to the node "a suitable vehicle is matched" is pushed, the mobile phone detects an operation of canceling pushing that is indicated, and may notify the smart watch to cancel display of the ride-hailing notification corresponding to the node "a suitable vehicle is matched". Then, the mobile phone enters the key node (namely, the node "the vehicle is to reach or has reached an origin specified by the user") in response to the service procedure, and notifies the smart watch to push a ride-hailing notification related to the node "the vehicle is to reach or has reached an origin specified by the user".

When the ride-hailing notification corresponding to the node "the vehicle is to reach or has reached an origin specified by the user" is pushed, if the mobile phone detects an operation of canceling pushing that is indicated, the smart watch may be notified to cancel display of the ride-hailing notification corresponding to the node "the vehicle is to reach or has reached an origin specified by the user". Then, the service procedure enters the ordinary node (namely, the node "a passenger has got on the vehicle"), and the mobile phone does not display a ride-hailing notification related to the node "a passenger has got on the vehicle", and does not notify the smart watch to push the ride-hailing notification. If a case in which the user indicates to cancel pushing, and the service procedure enters the ordinary node (namely, the node "a passenger has got on the vehicle") is not detected, the mobile phone switches to display the ride-hailing notification related to the node "a passenger has got on the vehicle", and notifies the smart watch to synchronously push the ride-hailing notification.

In a possible example, when detecting an operation of canceling pushing that is indicated, the smart watch may cancel display of the ride-hailing notification corresponding to the node "a suitable vehicle is matched". Then, when the mobile phone indicates the smart watch to push the ride-hailing notification of the key node (namely, the node "the vehicle is to reach or has reached an origin specified by the user"), the smart watch pushes the ride-hailing notification related to the node "the vehicle is to reach or has reached an origin specified by the user".

When the ride-hailing notification corresponding to the node "the vehicle is to reach or has reached an origin specified by the user" is pushed, if the mobile phone detects the operation of canceling pushing that is indicated, the mobile phone may cancel display of the ride-hailing notification corresponding to the node "the vehicle is to reach or has reached an origin specified by the user". Later, when the mobile phone indicates the smart watch to push the ride-hailing notification of the ordinary node (namely, the node "a passenger has got on the vehicle"), the smart watch may not respond.

For example, when the smart watch displays a persistent capsule used to push the information 1, the smart watch, in response to a user operation (an operation of canceling pushing that is indicated), and after the persistent capsule is canceled, in a process of performing a service corresponding to the information 1, if the mobile phone indicates the smart watch to push information 2 about the ordinary node of the service, the smart watch does not respond to the indication. If the mobile phone indicates the smart watch to push information 3 about the key node of the service, the smart watch displays, in response to the indication, the persistent capsule used to push the information 3.

In addition, if the user processes the target information by using the mobile phone, the user may also indicate the smart watch to cancel display of the persistent capsule corresponding to the target information.

3. Display ranges of the persistent capsule and the transient capsule are different.

The foregoing persistent capsule may be displayed on all user interfaces of the smart watch, for example, an AOD interface, a customized dial interface, a leftmost screen, a smart interface, an application list interface (displaying an application icon of an application that has been installed in the smart watch), and a notification bar interface. When the smart watch displays any user interface, it can be ensured that the first-type target information can efficiently reach the user.

The foregoing transient capsule may be displayed on one or more user interfaces, such as a smart interface, a leftmost screen, and a customized dial interface. A user interface that can be displayed by the transient capsule is limited, so that excessive interference caused by the second-type target information (namely, predicted information that needs to be viewed by the user or non-important and non-urgent information) to the user can be reduced. As shown in FIG. 10B, if the mobile phone indicates the smart watch to push the payment service information, the smart watch displays a dial interface 1005. The smart watch may display a floating capsule 1006 on the dial interface 1005, and the floating capsule 1006 is an access entry of the payment service. If the mobile phone indicates the smart watch to push the payment service information, the smart watch may not display the access entry of the payment service when displaying the AOD interface, the notification center interface, and the dynamic notification pop-up window.

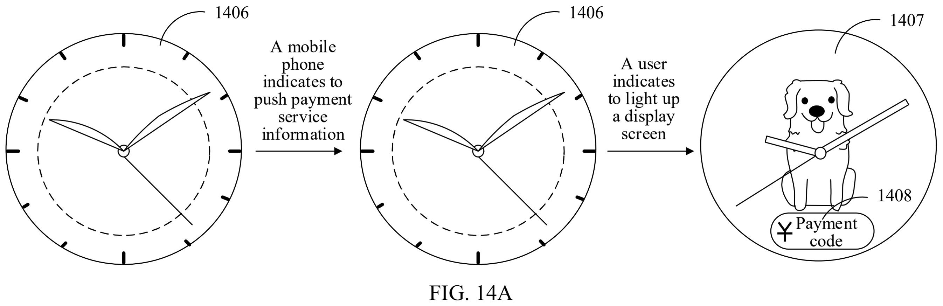

As shown in FIG. 14A, the smart watch displays an AOD interface 1406. In a period of displaying the AOD interface 1406, the mobile phone indicates the smart watch to push the payment service information (fourth information). In response to the payment service information belonging to the second-type information, the smart watch does not display, on the AOD interface 1406, a capsule used to push a payment service. Then, the smart watch displays a dial interface 1407 in response to the user operation, and may display, on the dial interface 1407, a transient capsule 1408 used to push a payment service.

As shown in FIG. 10, in a period in which the smart watch displays an AOD interface 1001, the mobile phone indicates the smart watch to push a ride-hailing notification (fifth information). In response to the ride-hailing notification belonging to the first-type information, the smart watch displays, on the AOD interface 1001, a floating capsule 1002 used to push the ride-hailing notification.

4. The transient capsule may provide only an entry for processing the target information. The persistent capsule not only provides the entry for processing the target information, but also may present some or all content of the target information.

For example, as shown in FIG. 12A, the transient capsule may display a small amount of text content and a small quantity of graphic identifiers. The graphic identifier may be a dynamic image, or may be a static image. This is not specifically limited. The small amount of text content may be text that can represent the target information. For example, when the target information is an application, the text content displayed on the transient capsule may be an application name or a main function name of the application.

For example, the persistent capsule may also display the graphic identifier. Different from the transient capsule, the persistent capsule can display more text content. In addition, the text content displayed on the persistent capsule may be key content corresponding to the pushed information.

In some embodiments, because display space of the persistent capsule is limited, when the persistent capsule needs to display a lot of text content, the persistent capsule may display the text content in a scrolling manner.

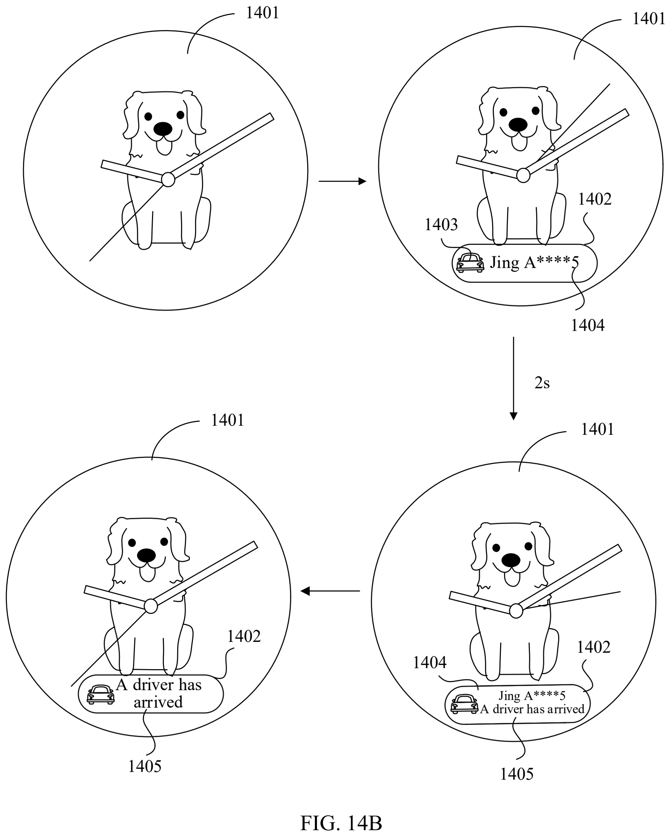

As shown in FIG. 14B, in a period of displaying a dial interface 1401, in response to a collaborative push notification 1 from the mobile phone, the smart watch displays a capsule 1402. The capsule 1402 is used to push a ride-hailing notification. As shown in FIG. 14B, the capsule 1402 may display an icon 1403 indicating the ride-hailing notification, and key content corresponding to the ride-hailing notification, for example, license plate information "Jing A****5" and trip reminding information "a driver has arrived". When "Jing A****5" and "a driver has arrived" cannot be simultaneously displayed on the capsule 1402, the key content 1404 (for example, the text "Jing A****5") may be displayed first, and the key content 1405 (for example, the text "a driver has arrived") is switched to be displayed at an interval of specified duration (for example, 2s). After the key content 1405 is displayed, the key content 1404 is switched to be displayed at an interval of specified duration. This process is repeated.

In the foregoing example, the ride-hailing notification is first information, "Jing A****5" may be referred to as first content, and "a driver has arrived" may be referred to as second content.

It may be understood that, in some embodiments, the transient capsule may also display a plurality of pieces of text content in a scrolling display manner. For details, refer to the persistent capsule, and details are not described herein again.

In another embodiment, when the smart watch displays the corresponding persistent capsule or the corresponding transient capsule in response to the collaborative push notification, the smart watch may further prompt, in a manner of vibration, the user to pay attention to the pushed target information.

In some embodiments, the smart watch may also push the same target information in a plurality of pushing forms.

For example, for the first-type target information, in addition to pushing the first-type target information by using the persistent capsule, the smart watch may further use the target information in a plurality of pushing forms such as a card, a dynamic full-screen pop-up window, and an icon.

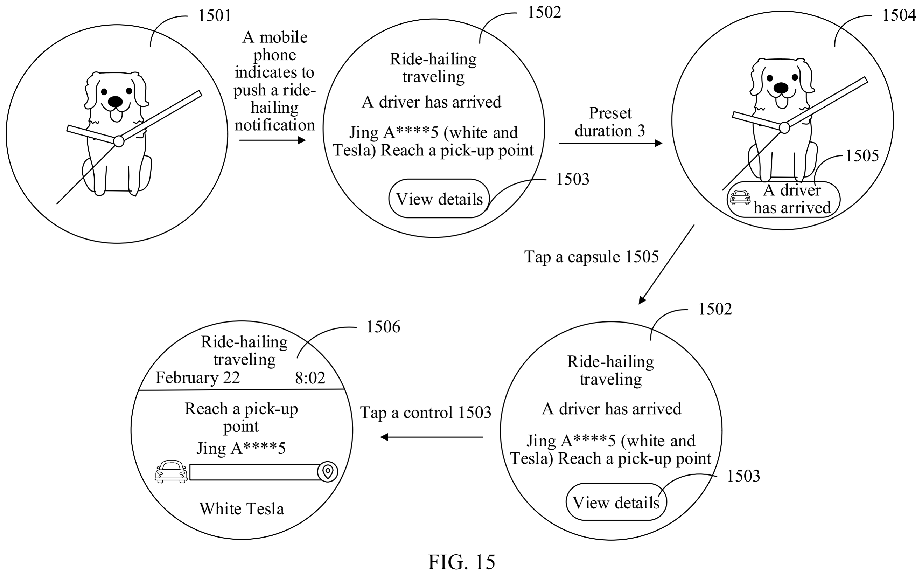

An example in which the target information is the ride-hailing notification is used. As shown in FIG. 15, in a period of displaying a dial interface 1501, in response to a collaborative push notification 1 from the mobile phone, the smart watch displays a full-screen pop-up window 1502, which is referred to as a first pop-up window. A dial interface 1504 is displayed after duration of displaying the full-screen pop-up window 1502 reaches preset duration 3 (for example, referred to as third duration), or an operation of canceling display of the full-screen pop-up window 1502 that is performed and indicated by the user is detected.

As shown in FIG. 15, in comparison to the dial interface 1501, a capsule 1505 (a first capsule) is newly displayed on the dial interface 1504. When the ride-hailing notification belongs to the first-type target information, the capsule 1505 is the persistent capsule. When a case in which the user indicates to cancel display of the capsule 1505 is not detected, the smart watch may always display the capsule 1505.

In addition, as shown in FIG. 15, in response to an operation of tapping the capsule 1505 that is performed by the user, the smart watch may display the full-screen pop-up window 1502 again. Before the user processes the ride-hailing notification, the user may trigger the smart watch to switch a pushing form corresponding to the ride-hailing notification between the full-screen pop-up window 1502 and the capsule 1505.

In some embodiments, as shown in FIG. 15, the full-screen pop-up window 1502 includes a control 1503 indicating to view details of the ride-hailing notification. In response to an operation of tapping the control 1503 that is performed by the user, the smart watch may further display the full-screen display interface, for example, an interface 1506, corresponding to the ride-hailing notification. The interface 1506 includes detailed content of the ride-hailing notification. After the full-screen display interface is displayed, it may be determined that the user has processed the ride-hailing notification. Then, in response to an operation of canceling display of the interface 1506 that is performed and indicated by the user, the dial interface 1501 may be displayed again, and the dial interface 1501 may not include the capsule 1505.

In some embodiments, when performing a same service, the mobile phone may indicate the smart watch to push target information with different content at one or more service procedure nodes. For example, when the mobile phone performs an online ride-hailing service, the mobile phone indicates the smart watch to push corresponding ride-hailing notifications at procedure nodes such as a suitable vehicle is matched, the vehicle is to reach or has reached an origin specified by the user, a passenger has got on the vehicle, and the vehicle reaches a destination specified by the user.

In a scenario in which in a process in which the mobile phone performs a service procedure, the target information that needs to be pushed belongs to the first-type information, when pushing, in response to an indication from the mobile phone, a 1^{st} piece of target information related to the service, the smart watch may first push the target information by using the dynamic full-screen pop-up window, and then push the target information by using the floating capsule. For implementation details, refer to FIG. 15. Details are not described herein again. Then, when pushing, in response to the indication from the mobile phone, an i^{th} piece of target information related to the service, the smart watch no longer pushes the target information by using the dynamic full-screen pop-up window, and only pushes the target information by using the floating capsule. i may be a positive integer greater than 1.

If the i^{th} piece of target information related to the service is pushed, in response to the user operation, the smart watch cancels display of the persistent capsule used to push the target information. When pushing, in response to the indication from the mobile phone, an (i+1)^{th} piece of target information related to the service, the smart watch may first push the target information by using the dynamic full-screen pop-up window, and then push the target information by using the floating capsule.

For another example, for the second-type target information, in addition to pushing the second-type target information by using the transient capsule, the smart watch may further push the target information in a plurality of pushing forms such as a card and an icon.

In some embodiments, when the smart watch pushes the target information in a plurality of pushing forms, a deduplication policy may be further used to avoid interference to the user by repeatedly recommending the same target information in a plurality of pushing forms (or referred to as access entries) on a same user interface.

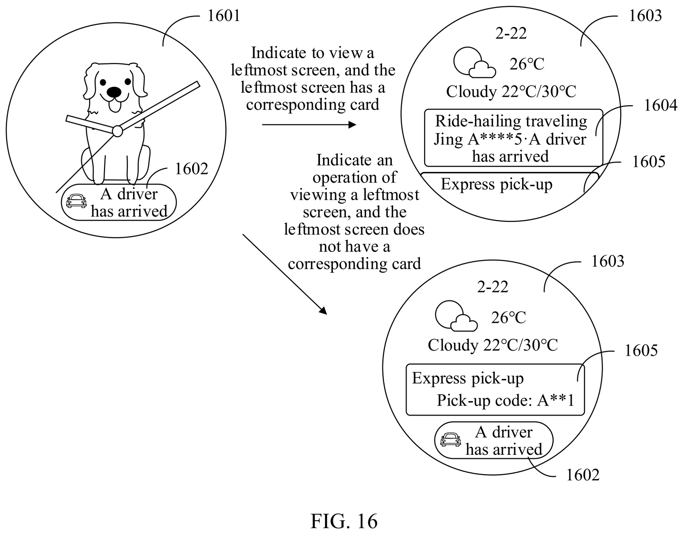

As shown in FIG. 16, in response to the collaborative push notification from the mobile phone, the smart watch displays a capsule 1602 (for example, referred to as a first capsule) on a dial interface 1601. The capsule 1602 is an access entry of a ride-hailing notification (for example, referred to as first information), and is also the persistent capsule. In response to an operation of displaying a leftmost screen that is performed and indicated by the user, for example, the operation is referred to as a third operation, the smart watch may display a leftmost screen 1603 (for example, referred to as a fourth interface). If a card 1604 used to push the ride-hailing notification is displayed on the leftmost screen 1603, for example, the card 1604 is referred to as a first card, the card 1604 is also an access entry of the ride-hailing notification. In response to the leftmost screen 1603 including the card 1604, the smart watch may cancel display of the capsule 1602, and for the ride-hailing notification, only one access entry of the card 1604 is reserved on the leftmost screen 1603. In addition, in response to a fourth operation performed by the user, the smart watch switches to display another interface that does not include an access entry of the first information, for example, returns to display the dial interface 1601 (a second interface), and the capsule 1602 may be displayed again.

If the leftmost screen 1603 does not include the card corresponding to the ride-hailing notification, the leftmost screen 1603 includes only a card 1605 corresponding to an express notification. The smart watch may continue to display the capsule 1602.

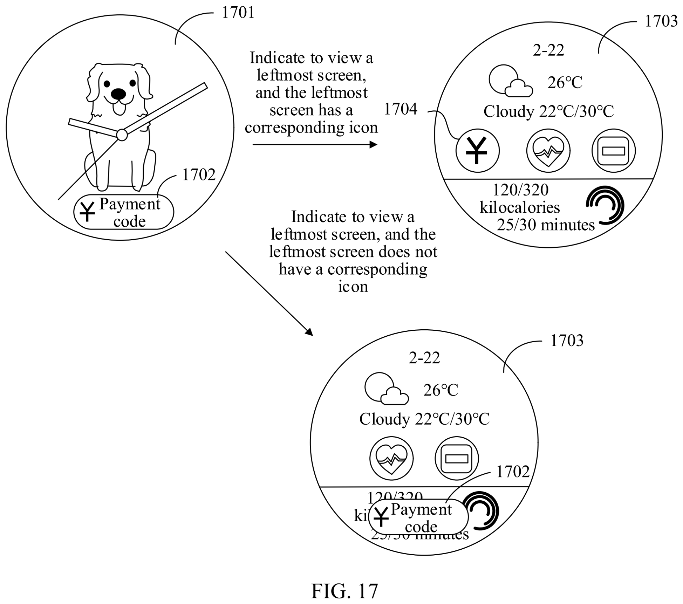

As shown in FIG. 17, in response to the collaborative push notification from the mobile phone, the smart watch displays a capsule 1702 on a dial interface 1701. The capsule 1702 is an access entry of a payment service (for example, referred to as first information) and is also a transient capsule. In response to an operation of displaying the leftmost screen that is performed and indicated by the user, the smart watch may display a leftmost screen 1703. If an icon 1704 used to push the payment service has been displayed on the leftmost screen 1703, for example, the icon 1704 is referred to as a first icon, the icon 1704 is also an access entry of the payment service. In response to the leftmost screen 1703 including the icon 1704, the smart watch may cancel display of the capsule 1702, and for the payment service, only one access entry of the icon 1704 is reserved on the leftmost screen 1703. If the leftmost screen 1703 does not include the icon corresponding to the payment service, the smart watch may continue to display the capsule 1702 until an operation performed by the user on the capsule 1702 is detected, or display duration of the capsule 1702 reaches the preset duration 2.

In some embodiments, the mobile phone may sequentially indicate the smart watch to display a plurality of pieces of target information. The plurality of pieces of target information may include first-type information, second-type information, and third-type information. The foregoing plurality of pieces of target information may also include target information that needs to be pushed and that is determined at different procedure nodes when the mobile phone performs the same service. The foregoing plurality of pieces of target information may also include target information that needs to be pushed and that is determined when the mobile phone performs different services.

When the smart watch sequentially displays different target information, the smart watch displays a corresponding persistent capsule or a corresponding transient capsule according to a later come first served rule.

In some embodiments, after displaying the first capsule used to push the first information, the smart watch may cancel display of the first capsule in response to an indication from the mobile phone, and then display a second capsule used to push second information. A time point at which it is indicated to push the second information is later than a time point at which it is indicated to push the first information may be referred to as a case in which a pushing time point of the second information is later than a pushing time point of the first information. According to the later come first served principle, the second capsule used to push the second information may be displayed in place of the first capsule used to push the first information.

If a pushing confidence of the second information is less than a pushing confidence of the first information, for example, the second information is second-type information and the first information is first-type information, after the second capsule is displayed for second duration (preset duration 4), display of the first capsule is resumed, and display of the second capsule is canceled. For another example, both the second information and the first information are the second-type information, the pushing confidence of the second information is less than the pushing confidence of the first information, and the smart watch displays the first capsule at a time point a, then cancels display of the first capsule at a time point b, and displays the second capsule. Then, display of the second capsule is canceled at a time point c, where a time interval between the time point b and the time point c is the preset duration 4. If a time interval between the time point a and the time point c is less than the preset duration 2, the first capsule may be displayed again. Display of the first capsule is canceled at a time point d. A time interval between the time point d and the time point a is the preset duration 2. If the time interval between the time point a and the time point c is not less than the preset duration 2, the first capsule is no longer displayed.

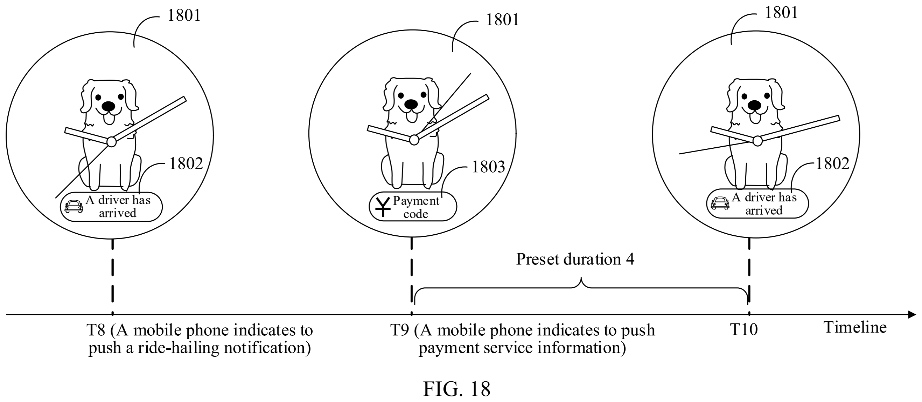

If the pushing confidence of the second information is equal to the pushing confidence of the first information or a difference between the pushing confidence of the second information and the pushing confidence of the first information is less than a set value, after display of the first capsule is canceled, display of the first capsule is no longer resumed. If the pushing confidence of the second information is greater than the pushing confidence of the first information, after display of the first capsule is canceled, display of the first capsule is no longer resumed. As shown in FIG. 18, an example in which a smart watch first displays a persistent capsule in response to an indication from a mobile phone, and then displays a transient capsule in response to an indication from the mobile phone is used. In a period of displaying a dial interface 1801, at a moment T8, in response to the indication (for example, collaborative push information 3) from the mobile phone, the smart watch displays a capsule 1802. The capsule 1802 is used to push a ride-hailing notification, and the ride-hailing notification belongs to first-type target information. Correspondingly, the capsule 1802 is the persistent capsule. At a moment T9, in response to an indication (for example, a collaborative push notification 2) from the mobile phone, a capsule 1803 is displayed. The capsule 1803 is used to push payment service information. The payment service information belongs to second-type target information. Correspondingly, the capsule 1803 is the transient capsule.

When display duration of the capsule 1803 reaches the preset duration 4 (for example, 10s), for example, the display duration reaches a moment T10, and a time interval between T10 and T9 is equal to the preset duration 4, the smart watch may cancel display of the capsule 1803, and display the capsule 1802 again. In some examples, the preset duration 4 may be equal to preset duration 2. In some other examples, the preset duration 4 may alternatively be shorter than the preset duration 2. This is not specifically limited in this embodiment of this application.

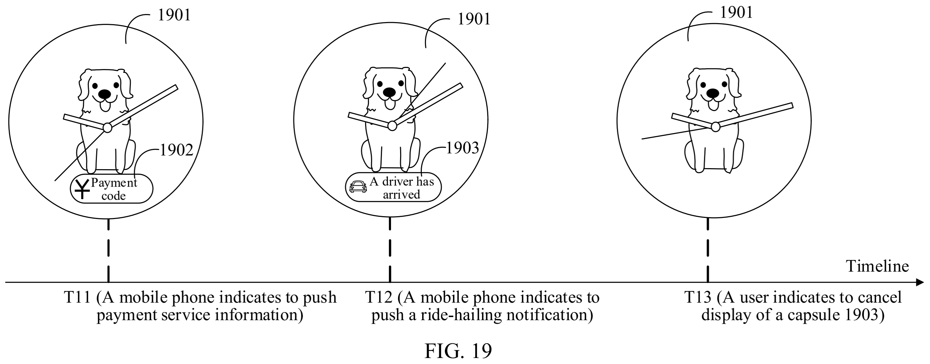

As shown in FIG. 19, an example in which a smart watch first displays a transient capsule in response to an indication from a mobile phone, and then displays a persistent capsule in response to an indication from the mobile phone is used.

In a period of displaying a dial interface 1901, at a moment T11, in response to the indication (for example, collaborative push information 2) from the mobile phone, the smart watch displays a capsule 1902. The capsule 1902 is used to push payment service information. The payment service information belongs to second-type target information. Correspondingly, the capsule 1902 is the transient capsule. At a moment T12, in response to an indication (for example, a collaborative push notification 1) from the mobile phone, a capsule 1903 is displayed. The capsule 1903 is used to push a ride-hailing notification, and the ride-hailing notification belongs to first-type target information. Correspondingly, the capsule 1903 is the persistent capsule. A time interval between T11 and T12 is less than the preset duration 2. Then, at a moment T13, in response to an operation of canceling display of the capsule 1903 that is performed and indicated by the user, the dial interface 1901 may be displayed. In addition, even if a time interval between T11 and T13 is less than the preset duration 2, after display of the capsule 1903 is canceled, the dial interface 1901 does not display the capsule 1902.

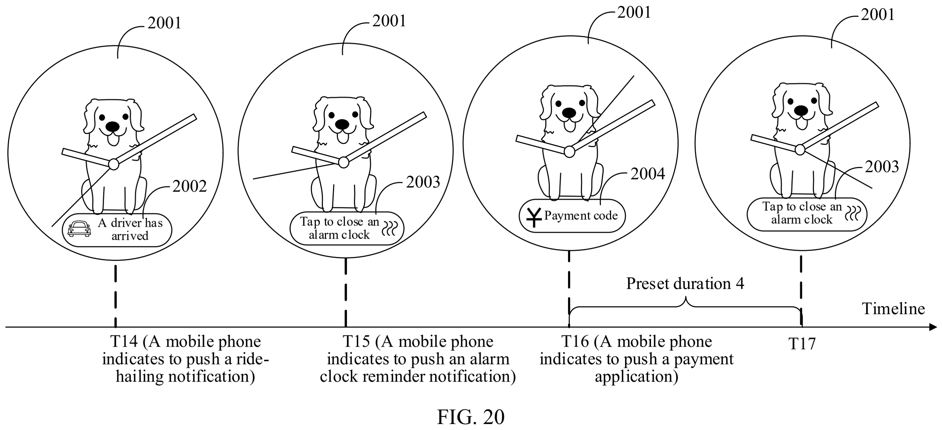

As shown in FIG. 20, in a period of displaying a dial interface 2001, at a moment T14, in response to the indication (for example, collaborative push information 3) from the mobile phone, the smart watch displays a capsule 2002. The capsule 2002 is used to push a ride-hailing notification, and the ride-hailing notification belongs to first-type target information. Correspondingly, the capsule 2002 is the persistent capsule. At a moment T15, in response to an indication (for example, a collaborative push notification 5) from the mobile phone, a capsule 2003 is displayed. The capsule 2003 is used to push an alarm clock reminder notification, and the alarm clock reminder notification also belongs to the first-type target information. Correspondingly, the capsule 2003 is the persistent capsule. At a moment T16, in response to an indication (for example, a collaborative push notification 2) from the mobile phone, a capsule 2004 is displayed. The capsule 2004 is used to push payment service information. The payment service information belongs to second-type target information. Correspondingly, the capsule 2004 is the transient capsule.

When display duration of the capsule 2004 reaches the preset duration 4, for example, the duration reaches a moment T17, and a time interval between T17 and T16 is equal to the preset duration 4, the smart watch may cancel display of the capsule 2004, and display the capsule 2003 again. It may be understood that, both the capsule 2003 and the capsule 2002 are persistent capsules. However, the capsule 2003 is displayed later than the capsule 2002, and according to a later come first served rule, after display of the transient capsule (the capsule 2004) is canceled, the smart watch displays the capsule 2003.

As shown in FIG. 18, FIG. 19, and FIG. 20, both the first-type target information and the second-type target information that are pushed need to satisfy "a rule that later received target information is preferentially displayed". A difference lies in that in a scenario in which the transient capsule is first displayed and then the persistent capsule is displayed, after display of the persistent capsule is canceled, the transient capsule whose display is interrupted is no longer displayed. In a scenario in which the persistent capsule is first displayed and then the transient capsule is displayed, after display of the transient capsule is canceled, display of the persistent capsule may be resumed.

In another embodiment, a priority of target information corresponding to a service of a specific type may be further configured to be higher than a priority of another piece of target information. For example, a priority of target information corresponding to a calling service and a priority of target information corresponding to an alarm clock reminder service are configured to be higher than the priority of the another piece of target information. In a period in which the smart watch pushes the target information corresponding to the calling service (or the target information corresponding to the alarm clock reminder service), if the mobile phone indicates the smart watch to push the another piece of target information, the smart watch may push the another piece of target information within a defined time period (the preset duration 4). Then, pushing of the target information corresponding to the calling service (or target information corresponding to an alarm clock reminder service) continues to be performed. Target information corresponding to a plurality of services of a specific type may be pushed according to a last come first served rule.

In some embodiments, when the target information is information representing a real-time progress, for example, download progress information or a ride-hailing notification, if content (for example, referred to as a progress value) representing a progress in the target information changes, a state of the target information is not updated, and if a progress value in the target information is replaced with an identifier indicating that the progress ends, the state of the target information is updated.

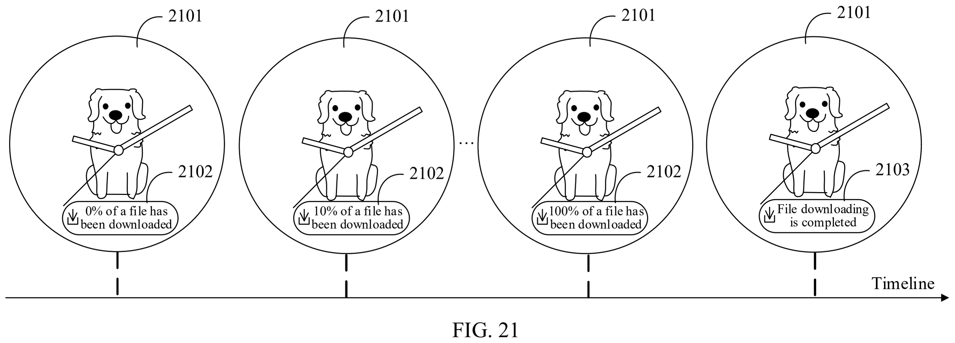

The download progress information is used as an example. As shown in FIG. 21, the smart watch displays a dial interface 2101, and in response to an indication from the mobile phone, the smart watch may display a capsule 2102. The capsule 2102 is a persistent capsule, and is used to push the download progress information to a user. The download progress information includes a percentage value (namely, a progress value) representing a file download completion degree. A change of the progress value in the download progress information does not trigger update of a state of the download progress information.

For example, as shown in FIG. 21, in a process in which the progress value in the download progress information changes from 0% to 100%, the state of the download progress information is not updated.

The progress value in the download progress information is replaced with an identifier indicating that the progress ends (for example, text content "file downloading is completed"). As shown in FIG. 21, the capsule 2103 displays "file downloading is completed", and the state of the download progress information is updated.

It may be understood that, after the smart watch cancels display of a floating capsule that is used to push the target information, if the state of the target information is updated, the floating capsule that is used to push the target information may be displayed again.

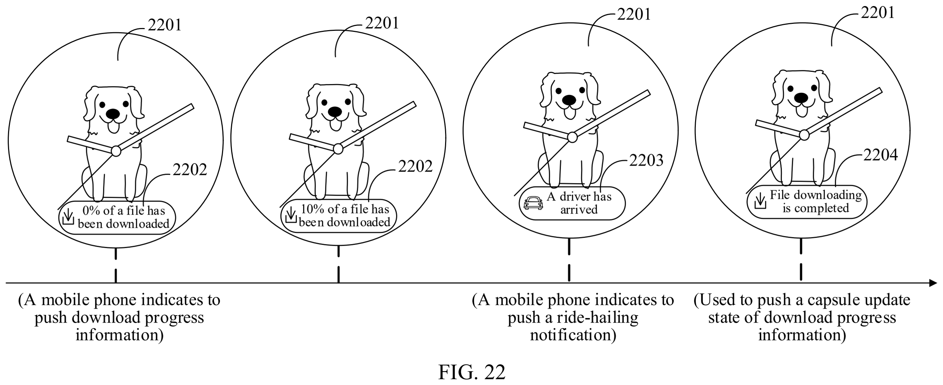

For example, as shown in FIG. 22, in a period of displaying a dial interface 2201, in response to an indication (for example, collaborative push information 5) from the mobile phone, the smart watch displays a capsule 2202. The capsule 2202 is used to push the download progress information. Then, as a progress of actually downloading a file by the mobile phone changes, the smart watch may be indicated to update the progress value displayed on the capsule 2202. As shown in FIG. 22, the capsule 2202 may be dynamically updated from displaying "0% of a file has been downloaded" to displaying "10% of a file has been downloaded". Then, in response to an indication (for example, collaborative push information 2) from the mobile phone, display of the capsule 2202 is canceled, and a capsule 2203 is displayed. The capsule 2203 is used to push a ride-hailing notification, and the capsule 2203 is the persistent capsule. During display of the capsule 2203, a progress of actually downloading a file by the mobile phone continues to change, and a state of the download progress information is not updated based on a change of a progress value. In this way, only when the progress value changes, the smart watch continues to display the capsule 2203. When the mobile phone actually completes file downloading, the progress value in the download progress information is replaced with the identifier indicating that the progress ends and state update corresponding to the download progress information. In response to the state update, the smart watch may cancel display of the capsule 2203 and display the capsule 2204. Both the capsule 2204 and the capsule 2202 are persistent capsules used to push the download progress information.

In the foregoing example, the download progress information is first information, the ride-hailing notification is third information, and a pushing time point of the third information is later than a pushing time point of the first information. The corresponding capsule 2202 and the corresponding capsule 2204 are first capsules, and the capsule 2203 is a third capsule.

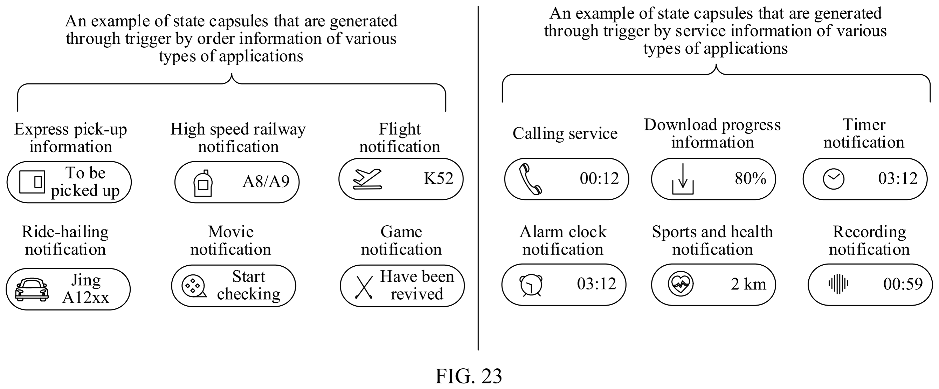

In addition, when the target information is information whose real-time condition needs to be learnt by the user, the smart watch may identify state update of the target information according to the real-time condition of the target information. For example, the target information whose real-time condition needs to be learnt by the user may include information that needs to be pushed and that is triggered to be generated by order information (creation of the order information is related to a user operation) of each application, for example, a flight notification, express pick-up information, a high speed railway notification, a ride-hailing notification, a movie notification, and a game real-time state notification. Correspondingly, a state capsule is shown in FIG. 23. For example, the target information whose real-time condition needs to be learnt by the user may further include information that needs to be pushed and that is triggered to be generated by service information of each application (the service information is related to a service provided by the application), for example, a calling service, download progress information, a timer notification, an alarm clock reminder notification, a sports and health notification, and a recording notification. Correspondingly, a state capsule is shown in FIG. 23.

In another embodiment, tool services developed by a manufacturer of an electronic device, such as microphone mode switching, media control, and screen projection, may also provide the user with a corresponding access entry by displaying a corresponding capsule. Details are not described in detail in this embodiment of this application.

Embodiments of this application further provide an electronic device. The electronic device may include: a memory and one or more processors. The memory is coupled to the processor. The memory is configured to store computer program code, and the computer program code includes computer instructions. When the processor executes the computer instructions, the electronic device is enabled to perform various steps performed by a mobile phone in the foregoing embodiments. Certainly, the electronic device includes but is not limited to the memory and the one or more processors.

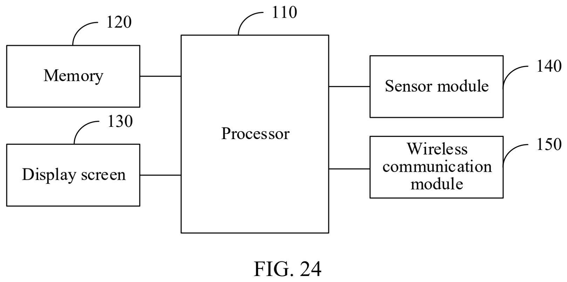

The electronic device may include a wearable device. An example in which the wearable device is a smart watch is used. As shown in FIG. 24, the smart watch includes a processor 110, a memory 120, a display screen 130, a sensor module 140, and a wireless communication module 150. The processor 110 may include one or more interfaces, and is configured to connect to another component of the smart watch. The one or more interfaces may include: an input/output (Input/Output, I/O) interface (also referred to as an I/O pin), an interruption pin, a data bus interface, and the like. The data bus interface may include one or more of interfaces such as a serial peripheral interface (serial peripheral interface, SPI) and an inter-integrated circuit (inter-integrated circuit, I2C) interface. For example, in this embodiment of this application, the processor 110 may connect to the sensor module 140 through the I/O pin, the interruption pin, or the data bus interface.

The memory 120 may be configured to store program code, for example, program code used for wireless communication between the smart watch and the mobile phone and used for performing UI display by the smart watch. The processor 110 may be configured to execute the foregoing application code, and invoke related modules to implement functions of the smart watch in the embodiments of this application. For example, a UI display function, a motion monitoring function, a wireless communication function, and the like of the smart watch are implemented.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors. Different processing units may be independent components, or may be integrated into one or more processors 110.

The smart watch implements a display function through the GPU, the display screen 130, the application processor, and the like. The GPU is a microprocessor for image processing, and is connected to the display screen 130 and the application processor. The GPU is configured to perform mathematical and geometric calculations and to render graphics. The processor 110 may include one or more GPUs, which execute program instructions to generate or change display information.

The display screen 130 is configured to display an image, a video, an interface of an application, and the like. The display screen 130 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flex light-emitting diode (flex light-emitting diode, FLED), a mini LED, a micro LED, a micro-oLED, a quantum dot light-emitting diode (quantum dot light-emitting diode, QLED), or the like.

The display screen 130 in this embodiment of this application may be a touchscreen. In other words, the touch sensor is integrated in the display screen 130. The touch sensor may also be referred to as a "touch panel". In other words, the display screen 130 may include a display panel and a touch panel. The touch sensor and the display screen 130 form a touchscreen, which is also referred to as a "touch screen". The touch sensor is configured to detect a touch operation performed on or near the touch sensor. After the touch operation is detected by the touch sensor, the touch operation may be transmitted by a driver of a kernel layer to an upper layer to determine a type of a touch event. Visual output related to the touch operation may be provided through the display screen 130. In some other embodiments, the touch sensor may alternatively be disposed on a surface of the smart watch, and is located on a position different from that of the display screen 130. In an optional implementation, the touch sensor may include a screen capacitance, and a capacitance value of the screen capacitance may vary according to different pressures.

The sensor module 140 may include sensors such as an accelerometer and a gyroscope, and is configured to monitor parameters such as a step count and sports duration of a user.

The wireless communication module 150 may be configured to support data exchange of wireless communication between a smart watch and other smart watches, including a Bluetooth, a global navigation satellite system (global navigation satellite system, GNSS), a wireless local area network, frequency modulation (frequency modulation, FM), near field communication (near field communication, NFC), an infrared (infrared, IR) technology, and the like.

It may be understood that, an example structure in the embodiments of this application does not constitute a specific limitation on the smart watch. The smart watch may include more or fewer components than those shown in FIG. 24, or two or more components may be combined, or a different component deployment may be used. Various components shown in FIG. 24 may be implemented in hardware, software, or in a combination of hardware and software that includes one or more signal processing or application-specific integrated circuits.

A software system of the smart watch may use a layered architecture, including an event-driven architecture, a microkernel architecture, a microservice architecture, or a cloud architecture. In this embodiment of this application, the software structure of the smart watch is described by using a LiteOS^{™} system as an example. It should be understood that, the system in this embodiment of this application may alternatively be another system such as an Android^{™} (Android) system. This is not limited in this application.

Embodiments of this application further provide a chip system, and the chip system may be applied to the smart watch in the foregoing embodiments. The chip system includes at least one processor and at least one interface circuit. The processor may be the processor in the foregoing smart watch. The processor may be connected to the interface circuit through a line. The processor may receive and execute computer instructions from the memory of the smart watch through the interface circuit. When the computer instructions are executed by the processor, the smart watch may be enabled to perform steps performed by the mobile phone in the foregoing embodiments. Certainly, the chip system may further include other discrete components. This is not specifically limited in the embodiments of this application.

In some embodiments, the foregoing descriptions about implementations allow a person skilled in the art to understand that, for the purpose of convenient and brief description, division of the foregoing functional modules is taken as an example for illustration. In actual application, the foregoing functions can be allocated to different modules and implemented based on a requirement, that is, an inner structure of an apparatus is divided into different functional modules to implement all or some of the functions described above. For a detailed working process of the foregoing system, apparatus, and unit, refer to a corresponding process in the foregoing method embodiments, and details are not described herein again.

Functional units of embodiments in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of the software function unit and sold or used as an independent product, the integrated unit may be stored in a computer-readable storage medium. Based on such an understanding, the technical solutions of the embodiments of this application essentially, or the part contributing to the conventional technology, or all or some of the technical solutions may be implemented in the form of a software product. The computer software product is stored in a storage medium and includes several instructions for instructing a computer device (which may be a personal computer, a server, or a network device) or a processor to perform all or some of the steps of the methods described in the embodiments of this application. The foregoing storage medium includes any medium that can store program code, such as a flash memory, a removable hard disk, a read-only memory, a random access memory, a magnetic disk, or an optical disc.

The foregoing descriptions are merely specific implementations of the embodiments of this application, but are not intended to limit the protection scope of the embodiments of this application. Any variation or replacement within the technical scope disclosed in the embodiments of this application shall fall within the protection scope of the embodiments of this application. Therefore, the protection scope of the embodiments of this application shall be subject to the protection scope of the claims.

## Claims

1. An information pushing method, applied to a wearable device, wherein the method comprises:
displaying a first interface, wherein the first interface is a user interface of the wearable device;
displaying a first capsule, wherein the first capsule is used to push first information; and
switching, in response to a first operation performed by a user, from the first interface to display a second interface, and continuing to display the first capsule, wherein the second interface is another user interface of the wearable device.

2. The method according to claim 1, wherein
when the first information is first-type information, the method further comprises: continuing to display the first capsule after duration in which the wearable device displays the first capsule reaches first duration; and canceling, in response to an operation performed by the user on the first capsule, display of the first capsule; and
when the first information is second-type information, the method further comprises: canceling, after duration in which the wearable device displays the first capsule reaches first duration, display of the first capsule, wherein
the first-type information is different from the second-type information.

3. The method according to claim 2, wherein the first-type information comprises information whose pushing confidence is greater than or equal to a preset value, the second-type information comprises information whose pushing confidence is less than the preset value, and the pushing confidence is used to represent a probability that pushed information is information that the user actually needs to view.

4. The method according to claim 2 or 3, wherein the first-type information comprises ride-hailing notification information, navigation notification information, takeaway delivery information, game information, and a trip reminder; and the second-type information comprises access control service information, attendance checking reminder information, payment service information, subway service information, and express pick-up information.

5. The method according to claim 2, wherein when the first information is the first-type information, the operation on the first capsule comprises a tapping operation on the first capsule; and after the canceling displaying the first capsule, the method further comprises:
displaying a third interface, wherein the third interface is a user interface used to process the first information; and
detecting a second operation of exiting that is indicated by the user, displaying the second interface again, and skipping displaying the first capsule.

6. The method according to claim 2, wherein when the first information is the first-type information, the operation on the first capsule comprises a downward swiping operation relative to the first capsule.

7. The method according to claim 1, wherein after the switching, in response to a first operation performed by a user, from the first interface to display a second interface, the method further comprises:
displaying a fourth interface in response to a third operation performed by the user, wherein the fourth interface comprises a first card or a first icon that is used to push the first information;
canceling display of the first capsule; and
displaying, in response to a fourth operation performed by the user, the second interface again, and displaying the first capsule again.

8. The method according to claim 1, wherein when the first information is first-type information, after the displaying the first capsule, the method further comprises:
displaying a second capsule, and canceling display of the first capsule, wherein the second capsule is used to push second information, a pushing confidence of the second information is less than a pushing confidence of the first information, the pushing confidence is used to represent a probability that pushed information is information that the user actually needs to view, and a pushing time point of the second information is later than a pushing time point of the first information; and
after duration in which the wearable device displays the second capsule reaches second duration, canceling display of the second capsule, and displaying the first capsule again.

9. The method according to claim 1, wherein when the first information is first-type information, after the displaying the first capsule, the method further comprises:
displaying a third capsule, and canceling display of the first capsule, wherein the third capsule is used to push third information, the third information is also the first-type information, and a pushing time point of the third information is later than a pushing time point of the first information.

10. The method according to claim 9, wherein the method further comprises:
canceling, in response to state update of the first information, display of the third capsule, and displaying the first capsule again.

11. The method according to claim 10, wherein the first information comprises progress information updated in real time, and the method further comprises: determining the state update of the first information in response to the progress information being updated to a case in which a progress ends.

12. The method according to any one of claims 1 to 11, wherein the first information comprises first content and second content, and the first capsule is used to display the first content and the second content in a scrolling manner.

13. The method according to any one of claims 1 to 12, wherein the wearable device is in communication connection with a first device, and before the displaying a first capsule, the method further comprises:
receiving a first indication from the first device, wherein the first indication comprises an identifier used to represent pushing the first information and a display attribute corresponding to the first capsule, wherein
when the first information is the second-type information, the first capsule corresponds to a first attribute value; and when the first information is the first-type information, the first capsule corresponds to a second attribute value, wherein the first attribute value indicates that the first capsule is displayed in a defined time period, and the second attribute value indicates that display duration of the first capsule is not limited.

14. The method according to any one of claims 1 to 13, wherein before the displaying a first capsule, the method further comprises:
displaying a first pop-up window, wherein the first pop-up window is used to push the first information; and
canceling display of the first pop-up window after the first pop-up window is displayed for third duration.

15. The method according to claim 1 or 2, wherein the wearable device is in communication connection with a first device, and before the displaying a first capsule, the method further comprises:
receiving a first indication from the first device for an N^{th} time, wherein the first indication comprises an identifier used to represent pushing the first information, wherein N is a preset positive integer, and the first information is the second-type information; and the displaying a first capsule comprises: displaying the first capsule for the N^{th} time in response to the first indication; and
after the duration in which the first capsule is displayed reaches the first duration, canceling display of the first capsule, wherein
if the operation performed by the user on the first capsule is not detected in any one of the first N time of displaying the first capsule, the method further comprises:
receiving the first indication for an N+1^{th} time; and
skipping displaying the first capsule.

16. The method according to claim 2, wherein the method further comprises:
displaying an always on display AOD interface in response to a user operation;
receiving an indication to push fourth information, and skipping displaying a capsule used to push the fourth information, wherein the fourth information is the second-type information;
switching, in response to the user operation, from the AOD interface to display a dial interface, wherein a fourth capsule is displayed on the dial interface, and the fourth capsule is used to push the fourth information;
displaying the always on display interface again in response to the user operation; and
displaying, in response to fifth information, a fifth capsule used to push the fifth information, wherein the fifth information is the first-type information.

17. An information pushing method, applied to a first device and a wearable device that are in communication with each other, wherein the method comprises:
displaying, by the first device, a card or a capsule that is used to push first information, wherein the wearable device displays a first interface, and the first interface is any user interface of the wearable device;
sending, by the first device, a first indication to the wearable device, wherein the first indication corresponds to the first information;
displaying, by the wearable device, a first capsule in response to the first indication, wherein the first capsule is used to push the first information; and
switching, by the wearable device in response to a first operation performed by a user, from the first interface to display a second interface, and continuing to display the first capsule.

18. A wearable device, wherein the wearable device comprises a display screen, a processor, and a memory, wherein the memory is configured to store computer instructions, and the display screen is configured to push information to a user; and when the processor is configured to execute the computer instructions, the wearable device is enabled to perform the method according to any one of claims 1 to 16.

19. A computer-readable storage medium, wherein the computer-readable storage medium comprises a computer program or instructions; and when the computer program or the instructions are run on a computer, the computer is enabled to perform the method according to any one of claims 1 to 16.
